# EUROPEAN PATENT APPLICATION

(11) **EP 4 653 324 A2**
(43) Date of publication of application: **26.11.2025**
(21) Application number: 25176756.2
(22) Date of filing: 15.05.2025
(51) Int. Cl.: B64F 5/10, G05B 19/18

(54) **PROCESSING SYSTEM FOR MANUFACTURING A COMPONENT AND A METHOD FOR THE SAME**

(30) Priority: 21.05.2024 US 202463650197 P; 20.02.2025 US 202519058361
(71) Applicant: The Boeing Company, Arlington, VA 22202 (US)
(72) Inventor: PETERSON, Drew Michael, Arlington, 22202 (US); WANG, Yen-Chien, Arlington, 22202 (US); WALLING, Michael James, Arlington, 22202 (US)
(74) Representative: Sandri, Sandro

(57) **Abstract**

A processing system and a method for manufacturing a component includes a workpiece having a work surface and an end-effector tool. The end-effector tool includes a fixture, and a set of first process tools attached to the fixture in a predetermined pattern. The first process tools are configured to perform a task to the work surface. The processing system also includes a controller in communication with the end-effector tool. The controller is configured to control movement of the end-effector tool to position the first process tools relative to the work surface such that the predetermined pattern is aligned at a predetermined location relative to the work surface. The controller is also configured to control operation of the first process tools such that the first process tools perform the task to the work surface to form a first processed area at the predetermined location of the work surface.

## Description

### CROSS-REFERENCE TO RELATED APPLICATION

This application claims the benefit of U.S. Provisional Patent Application Serial No. 63/650,197, filed May 21, 2024, and entitled "Processing System For Manufacturing A Component and A Method For The Same".

### BACKGROUND

Manufacturing processes are used to prepare various workpieces. For example, some workpieces require drilling, deburring, cutting, etc. These manufacturing processes may be automated using a machine. However, the machine may only drill one hole at a time. Furthermore, depending on the size of the workpiece and the size of the machines, the number of machines that may be used to drill holes to prepare the workpiece is limited.

### SUMMARY

Therefore, it is desirable to develop a processing system and a method that improves manufacturing processes, and other benefits are also discussed herein.

The present disclosure provides a processing system for manufacturing a component. The processing system includes a workpiece having a work surface and an end-effector tool. The end-effector tool includes a fixture, and a set of first process tools attached to the fixture in a predetermined pattern. The first process tools are configured to perform a task to the work surface. The processing system also includes a controller in communication with the end-effector tool. The controller includes a processor configured to execute instructions from a memory to thereby cause the controller to control movement of the end-effector tool to position the first process tools relative to the work surface such that the predetermined pattern is aligned at a predetermined location relative to the work surface. The controller is also configured to control operation of the first process tools such that the first process tools perform the task to the work surface to form a first processed area at the predetermined location of the work surface.

The present disclosure also provides a probe assembly for measuring characteristics of a hole of a workpiece. The probe assembly includes a probe insertable into the hole of the workpiece to measure characteristics of the hole. The probe assembly also includes a self-alignment compliance assembly coupled to the probe to allow compliance of the probe relative to the workpiece to accommodate one or more workpiece tolerances as the probe is inserted into the hole.

The present disclosure further provides a method of manufacturing a component of an aircraft. A workpiece is provided which has a work surface. An end-effector tool is selected to perform a task to the work surface. The end-effector tool includes a fixture and a set of first process tools attached to the fixture in a predetermined pattern. The first process tools are configured to perform the task to the work surface. Movement of the end-effector tool is controlled, via a controller, to position the first process tools relative to the work surface such that the predetermined pattern is aligned at a predetermined location relative to the work surface. Operation of the first process tools is controlled, via the controller, such that the first process tools perform the task to the work surface to form a first processed area at the predetermined location of the work surface.

The detailed description and the drawings or FIGS. are supportive and descriptive of the disclosure, but the claim scope of the disclosure is defined solely by the claims. While some of the best modes and other configurations for carrying out the claims have been described in detail, various alternative designs and configurations exist for practicing the disclosure defined in the appended claims.

### BRIEF DESCRIPTION OF THE DRAWINGS

FIG. 1 is a schematic illustration of a machine supporting an end-effector tool having a plurality of process tools being controlled via the machine.
FIG. 2 is a schematic illustration of the process tools, vacuum assembly, and positioning sensors controllable via the machine.
FIG. 3 is a schematic perspective view of a bottom side of the end-effector tool.
FIG. 4 is a schematic perspective view of a top side of the end-effector tool having a set of first process tools and a set of second process tools supported via a fixture.
FIG. 5 is a schematic bottom view of the end-effector tool of FIG. 4.
FIG. 6 is a schematic perspective view of a top side of the end-effector tool having a set of process tools of a first configuration.
FIG. 7 is a schematic perspective view of one of the process tools of FIG. 6.
FIG. 8A is a schematic side view of the process tool of FIG. 7.
FIG. 8B is a schematic side view of the process tool of FIG. 8A moving a clamp toward a workpiece.
FIG. 8C is a schematic side view of the process tool of FIG. 8B moving a drill toward a workpiece.
FIG. 8D is a schematic side view of the process tool of FIG. 8C retracting the clamp and the drill away from the workpiece.
FIG. 9A is a schematic side view of a self-alignment compliance assembly of the process tool of FIG. 7.
FIG. 9B is a schematic side view of the self-alignment compliance assembly of the process tool of FIG. 9A illustrating compliance of the drill.
FIG. 10 is a schematic perspective view of a top side of the end-effector tool having a set of process tools of a second configuration.
FIG. 11 is a schematic perspective view of one of the process tools of FIG. 10.
FIG. 12A is a schematic fragmentary cross-sectional view of the process tool of FIG. 11 moving toward the workpiece.
FIG. 12B is a schematic fragmentary cross-sectional view of the process tool of FIG. 12A expelling a fluid while being retracted from the workpiece.
FIG. 13 is a schematic fragmentary cross-sectional view of the process tool of FIG. 11 illustrating a self-alignment compliance assembly.
FIG. 14A is a schematic fragmentary cross-sectional view of the process tool of FIG. 11 illustrating the self-alignment compliance assembly prior to compliance.
FIG. 14B is a schematic fragmentary cross-sectional view of the process tool of FIG. 14A illustrating compliance of the self-alignment compliance assembly.
FIG. 15A is a schematic fragmentary cross-sectional view of the process tool of FIG. 11 moving a measuring device toward the workpiece.
FIG. 15B is a schematic fragmentary cross-sectional view of the process tool of FIG. 15A illustrating compliance of a probe of the measuring device relative to the workpiece prior to seating a housing of the measuring device on the workpiece.
FIG. 16 is a schematic side view of the process tool of FIG. 11.
FIG. 17 is a flowchart of a general example of a method of manufacturing a component.
FIG. 18A is the first part of a flowchart of a more specific example of a method of manufacturing the component.
FIG. 18B is the second part of the flowchart of FIG. 18A.

The present disclosure may be extended to modifications and alternative forms, with representative configurations shown by way of example in the drawings and described in detail below. Inventive aspects of the disclosure are not limited to the disclosed configurations. Rather, the present disclosure is intended to cover modifications, equivalents, combinations, and alternatives falling within the scope of the disclosure as defined by the appended claims.

### DETAILED DESCRIPTION

Those having ordinary skill in the art will recognize that all directional references (e.g., above, below, upward, up, downward, down, top, bottom, left, right, vertical, horizontal, etc.) are used descriptively for the FIGS. to aid the reader's understanding, and do not represent limitations (for example, to the position, orientation, or use, etc.) on the scope of the disclosure, as defined by the appended claims. Moreover, terms such as "first," "second," "third," and so on, may be used to describe separate components. Such terminology may include the words specifically mentioned above, derivatives thereof, and words of similar import. Furthermore, the term "substantially" can refer to a slight imprecision or slight variance of a condition, quantity, value, or dimension, etc., some of which are within manufacturing variance or tolerance ranges.

As used herein, an element or step recited in the singular and preceded by the word "a" or "an" should be understood as not necessarily excluding the plural of the elements or steps. Further, any reference to "one configuration" is not intended to be interpreted as excluding the existence of additional configurations that also incorporate the recited features. Moreover, unless explicitly stated to the contrary, configurations "comprising" or "having" an element or a plurality of elements having a particular property may include additional elements not having that property. The phrase "at least one of" as used herein should be construed to include the non-exclusive logical "or", i.e., A and/or B and so on depending on the number of components.

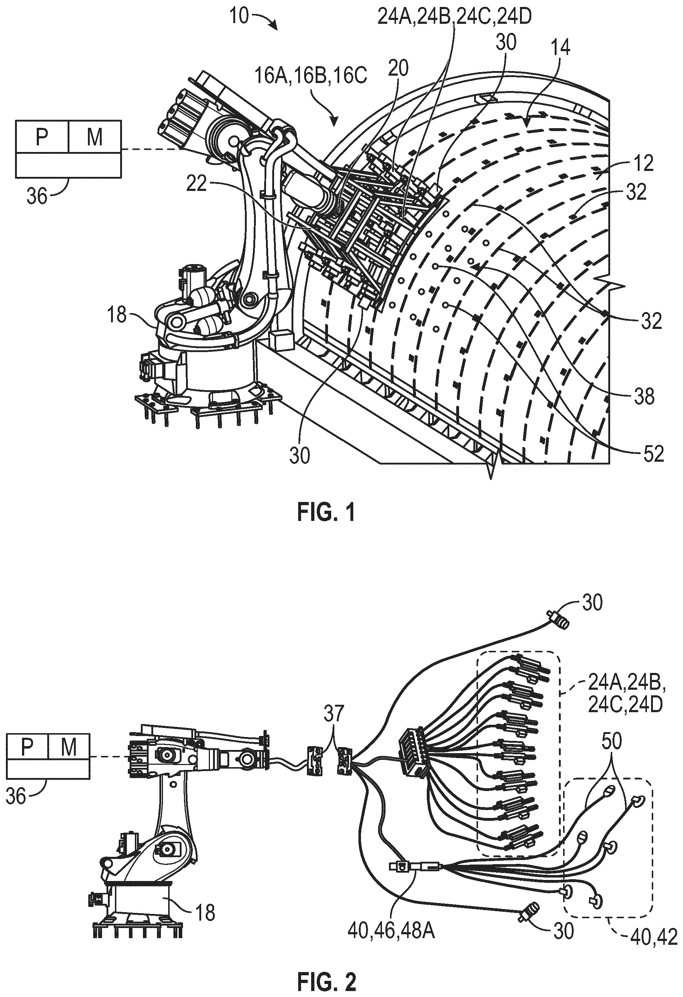

Referring to the figures, wherein like numerals indicate like or corresponding parts throughout the several views, a processing system 10 for manufacturing a component 12 is generally shown in FIG. 1. The processing system 10 may be used to improve manufacturing processes, and also used for other benefits, some of which will be discussed further below.

The processing system 10 described herein may be used to manufacture components 12 of various applications, and non-limiting examples of the applications may include flight vehicles, such as aircraft, drones, payloads, space shuttles, satellites, etc.; movable platforms, such as locomotives, high speed trains, automobiles, off-road vehicles, watercrafts, trailers, farm equipment, etc.; equipment, buildings, or any other applications where the manufacturing processes described herein may be utilized for the components 12.

Continuing with FIG. 1, the component 12 may initially be a workpiece 12 or a plurality of workpieces 12 assembled together or to be assembled together, and the workpiece(s) 12 have one or more manufacturing processes performed thereto to obtain a desired level of completion of the component 12.

The component 12 may be any suitable configuration, and therefore, the workpiece 12 may be any suitable configuration. General non-limiting examples of the components 12 may include one or more panels, skins, frames, brackets, spars, chords, engine cowl, or any other structural members or components that may use the manufacturing processes described herein, and combinations thereof. As non-limiting examples of the components 12 of a flight vehicle application, the components 12 may include one or more of panels, such as wings, fuselages, skins such as skin panels, panels such as inner panels and outer panels, frames, brackets, stringers, bulkheads, keels, ribs, doors, fittings, etc., and combinations thereof.

The processing system 10 described herein allows many different manufacturing processes to be performed to one workpiece 12 and many different workpieces 12. Therefore, depending on the type of the component 12, one or more manufacturing processes may be performed. Generally, the workpiece 12 has a work surface 14, and the various manufacturing processes may be performed to the work surface 14 to obtain the desired level of completion of the component 12. The manufacturing processes may be any suitable process for the desired component 12, and non-limiting examples may include drilling, countersinking, cutting, assembling, fastening, welding, sealing, finishing, lubricating, measuring, probing, joining, splicing, etc., and combinations thereof. Some examples of the manufacturing processes will be discussed below.

Continuing with FIG. 1, the processing system 10 also includes an end-effector tool 16A, 16B, 16C, which is operable to perform various manufacturing processes, as will be discussed further below. To control the end-effector tool 16A, 16B, 16C, a machine 18 may be utilized. Therefore, the end-effector tool 16A, 16B, 16C may be coupled to the machine 18 such that the machine 18 supports the end-effector tool 16A, 16B, 16C. As such, the processing system 10 utilizes the machine 18 to automate control of the end-effector tool 16A, 16B, 16C. The machine 18 may be configured to operate the end-effector tool 16A, 16B, 16C and/or move the end-effector tool 16A, 16B, 16C to a desired location.

The machine 18 may be any suitable configuration to control the end-effector tool 16A, 16B, 16C. As non-limiting examples, the machine 18 may include one or more of a robot, a robotic arm, a computer numerical control (CNC) machine, an automation machine, a factory machine, a crane, a hand lifting assembly, or any other suitable machine 18 that may control the end-effector tool 16A, 16B, 16C and/or move the end-effector tool 16A, 16B, 16C to the desired location.

Referring to FIG. 1, the end-effector tool 16A, 16B, 16C may include a coupler 20 that provides an interface between the end-effector tool 16A, 16B, 16C and the machine 18. The machine 18 may include a corresponding feature compatible with the coupler 20 such that the machine 18 may attach to and detach from the end-effector tool 16A, 16B, 16C through the coupler 20. When the machine 18 is attached to the end-effector tool 16A, 16B, 16C through the coupler 20, the machine 18 may move the end-effector tool 16A, 16B, 16C to the desired location. The coupler 20 may be any suitable configuration, and non-limiting examples of the coupler 20 may include one or more of quick-connect/disconnect mechanism, eyelets, connectors, clips, fasteners, bolt-on connections, grab-and-go connections, magnets or magnetic connectors, vacuum connectors or vacuum pick and place, etc.

As best shown in FIGS. 1, 4, 6, and 10, the end-effector tool 16A, 16B, 16C includes a fixture 22 and the coupler 20 may be attached to the fixture 22. Generally, the fixture 22 supports a plurality of process tools 24A, 24B, 24C, 24D. Therefore, multiple manufacturing processes (i.e., the same processes or different processes) may be performed via one machine 18 when the fixture 22 is attached thereto because the fixture 22 is configured to support multiple process tools 24A, 24B, 24C, 24D. Using multiple process tools 24A, 24B, 24C, 24D on one end-effector tool 16A, 16B, 16C may overcome low process rates and/or low volume of processes. As such, using multiple process tools 24A, 24B, 24C, 24D on one end-effector tool 16A, 16B, 16C may improve production processing systems 10 by improving process rates and/or volume rates. For example, manufacturing process times may be reduced using the processing system 10 described herein, which may increase workpiece output. In addition, using multiple process tools 24A, 24B, 24C, 24D on one end-effector tool 16A, 16B, 16C may reduce the amount of human interaction needed for one or more of the manufacturing processes. Therefore, the processing system 10 described herein may reduce costs and manufacturing complexities. Example configurations of some of the process tools 24A, 24B, 24C, 24D will be discussed further below.

Continuing with FIGS. 1, 4, 6, and 10, the process tools 24A, 24B, 24C, 24D may be in any suitable arrangement relative to each other. For example, the process tools 24A, 24B, 24C, 24D may be arranged in rows or columns relative to the fixture 22 and/or the process tools 24A, 24B, 24C, 24D may be offset from each other, etc., depending on the desired locations of the workpiece 12 to be processed.

Referring to FIG. 1, the machine 18 is illustrating holding the end-effector tool 16A, 16B, 16C relative to the workpiece 12. As also illustrated in this figure, a portion of the fixture 22 is contour complementary to the work surface 14 of the workpiece 12, which assists in positioning of the process tools 24A, 24B, 24C, 24D at the similar contour which correspondingly positions all of the process tools 24A, 24B, 24C, 24D at a consistent distance relative to the work surface 14 of the workpiece 12 before operating the process tools 24A, 24B, 24C, 24D. Therefore, for example, if the process tools 24A, 24B, 24C, 24D are extended toward the work surface 14 to perform an operation to the work surface 14, each of the process tools 24A, 24B, 24C, 24D may move the same distance toward the work surface 14 due to the process tools 24A, 24B, 24C, 24D being positioned complementary to the contour of the work surface 14. It is to be appreciated that, optionally, one or more of the process tools 24A, 24B, 24C, 24D may move a farther distance, or a shorter distance, toward the work surface 14 than other process tools 24A, 24B, 24C, 24D.

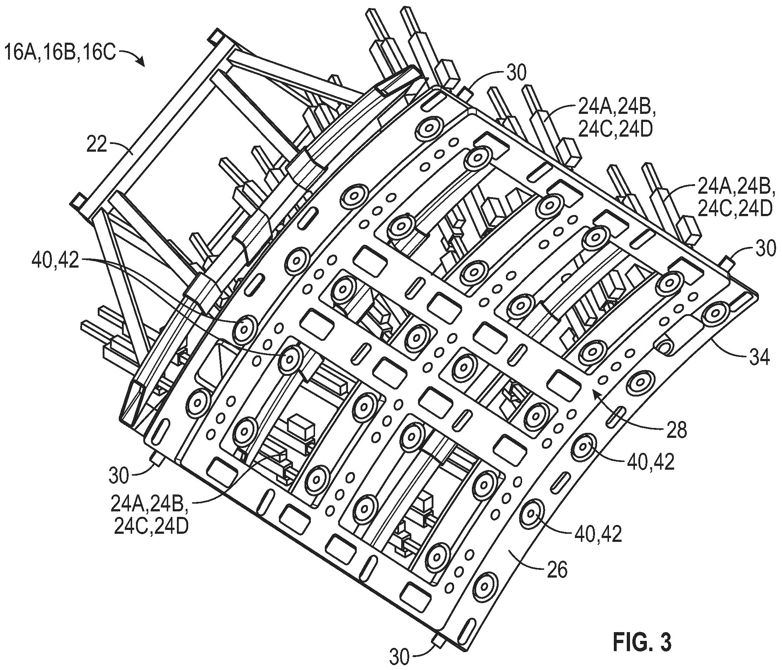

Therefore, for example, as best shown referring to FIG. 1, the work surface 14 and part of the end-effector tool 16A, 16B, 16C may have matching contours. As such, the work surface 14 may present a first configuration, and this work surface 14 may be worked on to advance processing of the component 12. Turning to FIGS. 1 and 3, the fixture 22 may include a fixture platform 26 having an outer surface 28 presenting a second configuration complementary to the first configuration of the work surface 14. The complementary features of the fixture platform 26 and the work surface 14 may be the surfaces that face each other, as best shown in FIG. 1. That is, the work surface 14 of the workpiece 12 and the outer surface 28 of the fixture platform 26 face each other when the end-effector tool 16A, 16B, 16C is disposed adjacent to the workpiece 12, as shown in FIG. 1, and it is these surfaces 14, 28 that may generally complement each other. It is to be appreciated that the first configuration of the work surface 14 and the second configuration of the fixture platform 26 may be any suitable configuration, and non-limiting examples may include arcuate, flat, corrugated, angled, tapered, etc.

In certain configurations, the workpiece 12 is the panel of the aircraft, but it is to be appreciated that the workpiece 12 may be other configurations, and the below discussion about the panel is for illustrative purposes. In certain configurations, the panel may be arcuate in a convex orientation and/or a concave orientation, and therefore, the first configuration of the work surface 14 may be arcuate in a convex orientation and/or a concave orientation. Similarly in certain configurations, the second configuration of the outer surface 28 of the fixture platform 26 may be arcuate in a convex orientation and/or a concave orientation opposite of the work surface 14 such that the work surface 14 and the fixture platform 26 are complementary. As such, depending on the orientation of the work surface 14, the fixture platform 26 is configured opposite thereof so that the fixture platform 26 generally complements the work surface 14. Therefore, if the workpiece 12 is the orientation of FIG. 1, the work surface 14 may be arcuate in the convex orientation, and then the fixture platform 26 is complementary to the work surface 14 in the concave orientation so that the fixture platform 26 generally complements the work surface 14.

As mentioned above, the end-effector tool 16A, 16B, 16C includes process tools 24A, 24B, 24C, 24D, and the process tools 24A, 24B, 24C, 24D may be various configurations depending on the desired process or processes to be performed to the workpiece 12. Each of the process tools 24A, 24B, 24C, 24D may be configured to perform the same task or a different task.

For example, the end-effector tool 16A, 16B, 16C also includes a set of first process tools 24A, 24B, 24C, 24D attached to the fixture 22 in a predetermined pattern. The first process tools 24A, 24B, 24C, 24D are configured to perform a task to the work surface 14. Therefore, the first set of process tools 24A, 24B, 24C, 24D are configured to perform the same task. That is, the first process tools 24A, 24B, 24C, 24D are arranged across the fixture 22 in a template.

In certain configurations, the end-effector tool 16A, 16B, 16C may also include a set of second process tools 24A, 24B, 24C, 24D attached to the fixture 22 in a predetermined pattern. The second process tools 24A, 24B, 24C, 24D are configured to perform a task to the work surface 14. Therefore, the second set of process tools 24A, 24B, 24C, 24D are configured to perform the same task. That is, the second process tools 24A, 24B, 24C, 24D are arranged across the fixture 22 in a template.

The predetermined pattern or template formed via the process tools 24A, 24B, 24C, 24D across the fixture 22 may be designed to locate the process tools 24A, 24B, 24C, 24D so the processing system 10 may execute operation cycles in accurate positions that match the workpiece 12 design.

In certain configurations, each of the first process tools 24A, 24B, 24C, 24D may be configured to perform one task and each of the second process tools 24A, 24B, 24C, 24D may be configured to perform another task different from the first process tools 24A, 24B, 24C, 24D. That is, the first process tools 24A, 24B, 24C, 24D may be configured to perform a first process to the work surface 14 and the second process tools 24A, 24B, 24C, 24D may be configured to perform a second process to the work surface 14.

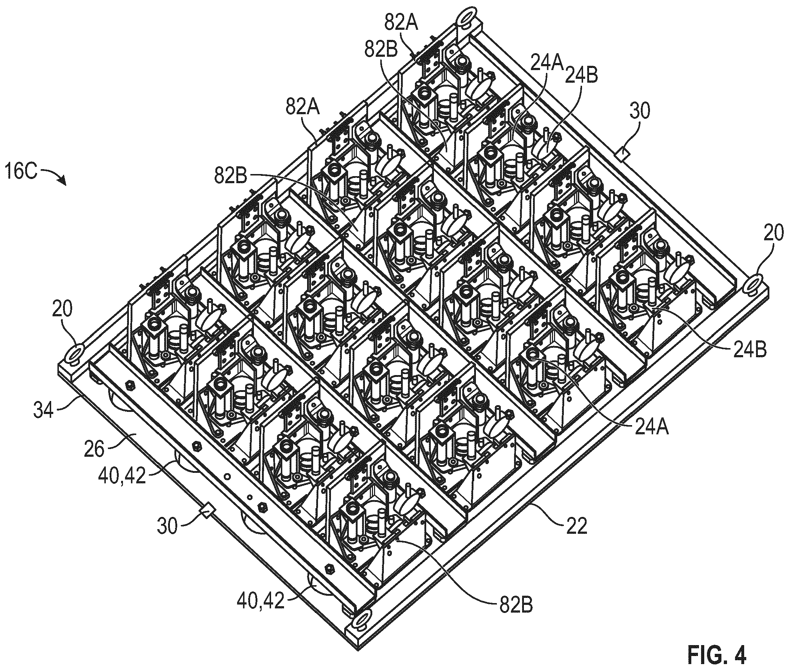

Optionally, the end-effector tool 16C may incorporate the set of the first process tools 24A as well as the set of the second process tools 24B, as shown in FIG. 4. Therefore, in certain configurations, the set of the second process tools 24B may be attached to the fixture 22 proximal to the set of the first process tools 24A. It is to be appreciated that the end-effector tool 16C may incorporate more than the first set and the second set of process tools 24A, 24B. That is, the end-effector tool 16C may incorporate any suitable number of sets of different process tools 24A, 24B, 24C, 24D.

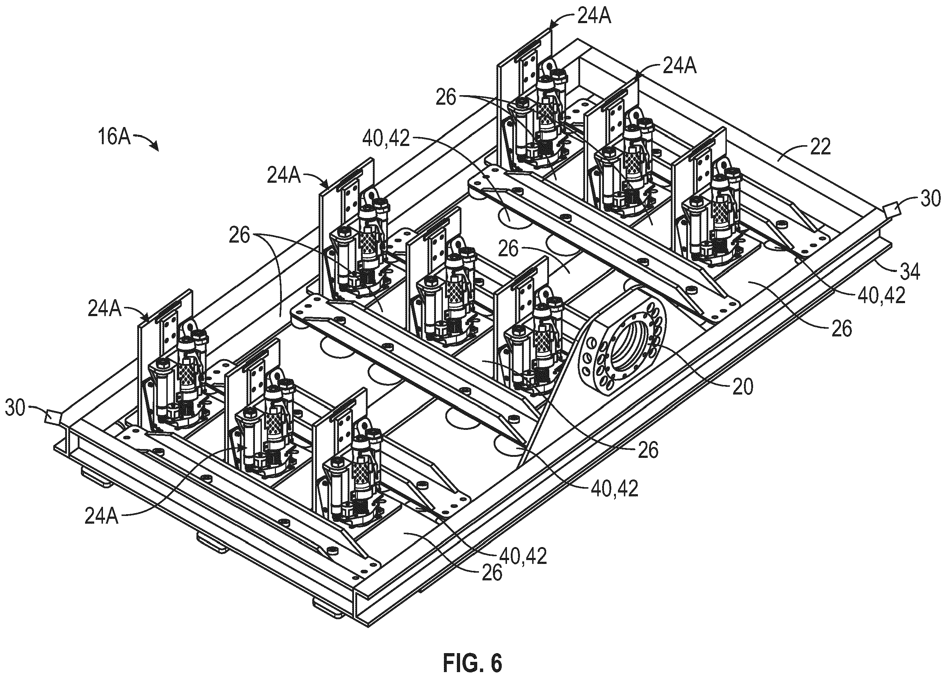

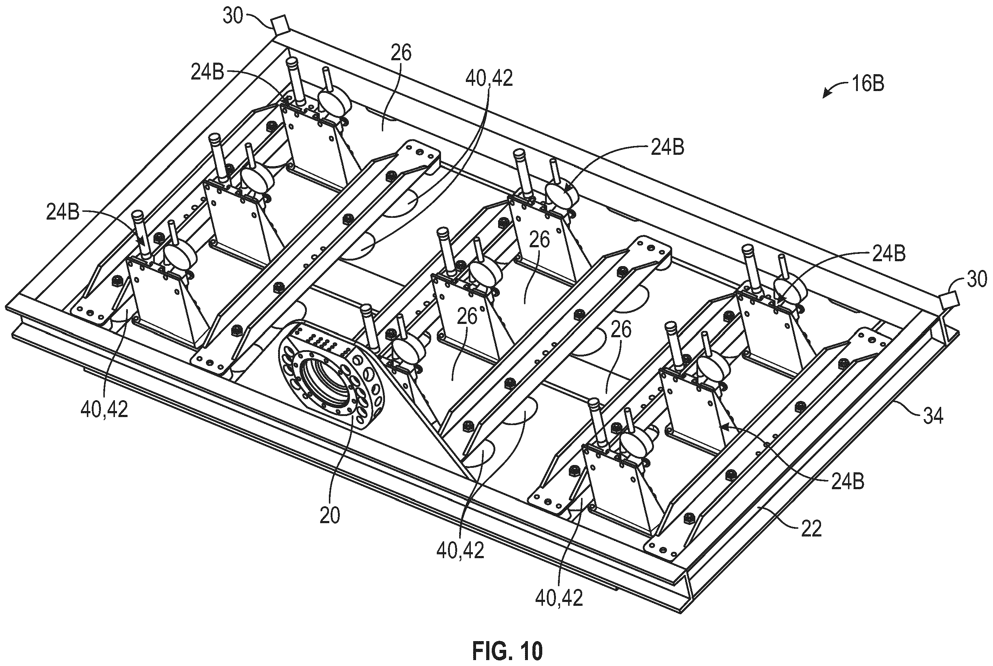

Alternatively, in other configurations, separate end-effector tools 16A, 16B, 16C may be interchanged with the machine 18. That is, separate end-effector tools 16A, 16B, 16C may support respective types of the process tools 24A, 24B, 24C, 24D. That is, turning to FIG. 6, one set of process tools 24A, 24B, 24C, 24D is affixed to the fixture 22 of one end-effector tool 16A, 16B, 16C, and in this example, the process tools 24A, 24B, 24C, 24D may be referred to as the first process tools 24A. Now turning to FIG. 10, another set of process tools 24A, 24B, 24C, 24D is affixed to the fixture 22 of one end-effector tool 16A, 16B, 16C, and in this example, the process tools 24A, 24B, 24C, 24D may be referred to as the second process tools 24B.

Therefore, optionally, the end-effector tool 16A, 16B, 16C may be further defined as a first end-effector tool 16A having the first process tools 24A (see FIG. 6), and the processing system 10 may further include a second end-effector tool 16B having the set of second process tools 24B (see FIG. 10). That is, the machine 18 may operate the first end-effector tool 16A for certain workpieces 12 or certain processes and then the machine 18 may disconnect from the first end-effector tool 16A and connect to the second end-effector tool 16B such that the second end-effector tool 16B may operate for certain workpieces 12 or other processes. The first end-effector tool 16A and the second end-effector tool 16B may be interchangeable with each other to perform separate tasks to the work surface 14.

Depending on the configuration of the component 12, different end-effector tools 16A, 16B, 16C may be required for different components 12. Therefore, in yet other configurations, the first end-effector tool 16A may have the process tools 24A, 24B, 24C, 24D attached to the fixture platform 26 in a different pattern from another first end-effector tool 16A to accommodate different process areas of various workpiece configurations. Similarly, the second end-effector tool 16B may have the process tools 24A, 24B, 24C, 24D attached to the fixture platform 26 in a different pattern from another second end-effector tool 16B to accommodate different process areas of various workpiece configurations. Furthermore, in yet other configurations, the fixture platform 26 of the first end-effector tool 16A may be one configuration to accommodate one work surface 14 configuration, and the fixture platform 26 of another one of the first end-effector tools 16A may be a different configuration to accommodate a different work surface 14 configuration. Similarly, the fixture platform 26 of the second end-effector tool 16B may be one configuration to accommodate one work surface 14 configuration, and the fixture platform 26 of another one of the second end-effector tools 16B may be a different configuration to accommodate a different work surface 14 configuration.

The first process tools 24A, 24B, 24C, 24D and the second process tools 24A, 24B, 24C, 24D may be any suitable tools attachable to the fixture platform 26, and non-limiting examples of the first process tools 24A, 24B, 24C, 24D and the second process tools 24A, 24B, 24C, 24D are discussed herein. It is to be appreciated that referring to the process tools 24A, 24B, 24C, 24D as the first process tools 24A or the second process tools 24B is for illustrative purposes, and therefore, the process tools 24A, 24B, 24C, 24D of FIG. 6 may be referred to as the second process tools 24B and the process tools 24A, 24B, 24C, 24D of FIG. 10 may be referred to as the first process tools 24A, and vice-versa.

Next, the processing system 10 provides accurate positioning of the end-effector tool 16A, 16B, 16C relative to the workpiece 12, which may provide consistent manufacturing repeatability. As mentioned above, the machine 18 moves the end-effector tool 16A, 16B, 16C to the desired position relative to the work surface 14. Referring to FIGS. 1 and 2, the end-effector tool 16A, 16B, 16C may include a plurality of positioning sensors 30 coupled to the fixture 22. Generally, the positioning sensors 30 are configured to locate the end-effector tool 16A, 16B, 16C relative to the workpiece 12. More specifically, the positioning sensors 30 are configured to align the end-effector tool 16A, 16B, 16C relative to the workpiece 12 such that the process tools 24A, 24B, 24C, 24D, i.e., the first process tools 24A, the second process tools 24B, etc., align at a predetermined location. That is, various indexing features may be implemented to ensure the proper placement of the process tools 24A, 24B, 24C, 24D relative to the work surface 14. The placement of the end-effector tool 16A, 16B, 16C may be recorded and analyzed by utilizing the positioning sensors 30. That is, feedback may be obtained via the positioning sensors 30, which may be used to ensure that the desired placement of the process tools 24A, 24B, 24C, 24D relative to the work surface 14 occurs. For example, in certain configurations, one of the positioning sensors 30 may establish the x, y, z offsets and another one of the positioning sensors 30 may establish the i, j, k offsets.

In certain configurations, the positioning sensors 30 may include a camera assembly, a vision assembly, a laser assembly, a light assembly, a measuring assembly, etc. Therefore, the positioning sensors 30 may include features for vision, infrared, thermo-heat signature, etc., to accurately position/locate the process tools 24A, 24B, 24C, 24D relative to the work surface 14.

Depending on the type of positioning sensors 30 being implemented, the workpiece 12 may optionally include at least one reference guide 32 (see FIG. 1). The reference guide 32 may be implemented in conjunction with the positioning sensors 30 to assist in locating the end-effector tool 16A, 16B, 16C relative to the workpiece 12. Therefore, the positioning sensors 30 may be configured to identify the reference guide 32 to position the end-effector tool 16A, 16B, 16C relative to the work surface 14 such that the process tools 24A, 24B, 24C, 24D, i.e., the first process tools 24A, the second process tools 24B, etc., align in the predetermined location.

The reference guide 32 may be any suitable configuration or feature, and non-limiting examples of the reference guide 32 may include lines, marks, etches, stickers, projected patterns, optical reference points such as external optical reference points, magnetic reference targets, etc., disposed on the workpiece 12. One example of external optical reference points is activating one or more lasers to point where the machine 18 should move relative to the workpiece 12, and the positioning sensors 30 of the end-effector tool 16A, 16B, 16C will locate the laser points to align the process tools 24A, 24B, 24C, 24D relative to the work surface 14. One example of the magnetic reference targets is placing one or more magnets inside of the workpiece 12 or on a backside of the workpiece 12, and the positioning sensors 30 of the end-effector tool 16A, 16B, 16C will locate the magnets to align the process tools 24A, 24B, 24C, 24D relative to the work surface 14. It is to be appreciated that any suitable number of reference guides 32 may be implemented. The positioning sensors 30 and the reference guides 32 may optionally be implemented instead of indexing holes and corresponding indexing rods, but it is to be appreciated that indexing holes and corresponding indexing rods may optionally be implemented to locate the end-effector tool 16A, 16B, 16C relative to the workpiece 12.

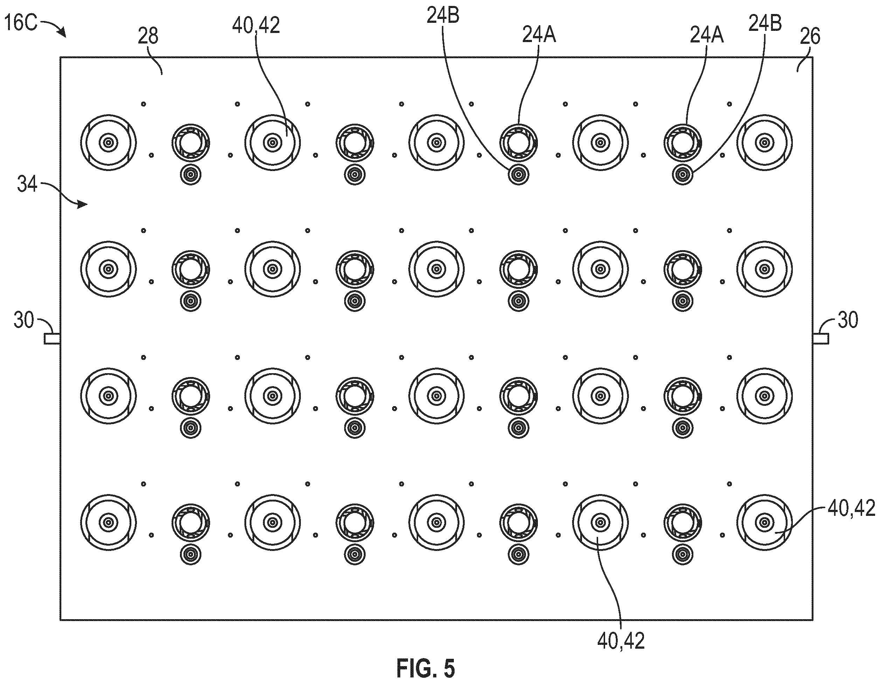

Generally, the positioning sensors 30 may be attached to the fixture 22. In certain configurations, the positioning sensors 30 may be attached to the fixture platform 26. The positioning sensors 30 may be spaced from each other around the fixture 22, and more specifically, spaced from each other relative to the fixture platform 26. FIGS. 1, 3-6, and 10 illustrate non-limiting examples of potential locations that the positioning sensors 30 may be attached to the fixture 22/the fixture platform 26. More or less of the positioning sensors 30 may be implemented than as illustrated.

In certain configurations, the fixture platform 26 may include an outer periphery 34, and the outer periphery 34 surrounds the process tools 24A, 24B, 24C, 24D. Optionally, the positioning sensors 30 may be disposed proximal to the outer periphery 34, and in certain configurations, the positioning sensors 30 may be attached to the outer periphery 34. By disposing the positioning sensors 30 at the outer periphery 34, the positioning sensors 30 may have a wider range of locating the end-effector tool 16A, 16B, 16C relative to the workpiece 12 than locating the positioning sensors 30 at other locations. Optionally, the positioning sensors 30 may be movable relative to the fixture 22, and more specifically movable relative to the fixture platform 26 to provide an adjustable range of locating the end-effector tool 16A, 16B, 16C relative to the workpiece 12. By having the positioning sensors 30 being movable, a wider range of locating, such as a wider range of vision, may be obtained as compared to having fixed positioning sensors.

In certain configurations, the positioning sensors 30 may also be configured to provide quality control of the workpiece 12. That is, the positioning sensors 30 may use vision, infrared, etc., to obtain data about the workpiece 12, and the collected data may be used by other systems to analyze the data and make determinations about the workpiece 12, such as determinations about the quality of the workpiece 12.

To control various features of the processing system 10, a controller 36 may be implemented. Therefore, turning back to FIGS. 1 and 2, the processing system 10 may also include the controller 36 in communication with the end-effector tool 16A, 16B, 16C. The controller 36 may control operation of the machine 18, the process tools 24A, 24B, 24C, 24D, and other features, some of which are discussed further below. In addition, the controller 36 may collect data, analyze data, and/or make decisions based on various data. For example, the controller 36 may collect data about the workpiece 12 during any of the manufacturing processes, and be programmed to determine various quality control about the workpiece 12/the component 12. Additional control features of the controller 36 will be discussed further below.

The controller may be in communication with the various features of the end-effector tool 16A, 16B, 16C via an electrical interface or module 37 (see FIG. 2). The controller 36 may include a processor P configured to execute instructions from a memory M. Processing circuitry may include one or more processors P alone or in combination with one or more memories. The processing circuitry is generally any piece of computer hardware that is configured to process information such as, for example, data, computer programs, and/or other suitable electronic information. The processing circuitry is composed of a collection of electronic circuits some of which may be packaged as an integrated circuit or multiple interconnected integrated circuits (an integrated circuit at times more commonly referred to as a "chip"). The processing circuitry may be configured to execute computer programs, which may be stored onboard the processing circuitry or otherwise stored in the memory M of the same controller 36 or a different controller 36.

The processing circuitry may include a number of processors P, a multi-core processor or some other type of processor, depending on the particular implementation. Further, the processing circuitry may be implemented using a number of heterogeneous processor systems in which a main processor is present with one or more secondary processors on a single chip. As another example, the processing circuitry may be a symmetric multi-processor system containing multiple processors of the same type. Thus, although the processing circuitry may be configured to execute a computer program to perform one or more functions, the processing circuitry of various examples may be configured to perform one or more functions without the aid of a computer program. In either instance, the processing circuitry may be appropriately programmed to perform functions or operations according to example implementations of the present disclosure.

The memory M may be generally any piece of computer hardware that is configured to store information such as, for example, data, computer programs (e.g., computer-readable program code) and/or other suitable information either on a temporary basis and/or a permanent basis. The memory M may include volatile and/or non-volatile memory, and may be fixed or removable. Non-limiting examples of suitable memory M may include random access memory (RAM), read-only memory (ROM), a hard drive, a flash memory, a thumb drive, a removable computer diskette, an optical disk, a magnetic tape or some combination of the above. Optical disks may include compact disk-read only memory (CD-ROM), compact disk-read/write (CD-R/W), DVD or the like. In various instances, the memory M may be referred to as a computer-readable storage medium. The computer-readable storage medium may be a non-transitory device configured to store information. Computer-readable medium as described herein may generally refer to a computer-readable storage medium or computer-readable transmission medium.

In addition to the memory M, the processing circuitry may also be connected to one or more interfaces for displaying, transmitting and/or receiving information. The interfaces may include a communications interface (e.g., communications unit) and/or one or more user interfaces. The communications interface may be configured to transmit and/or receive information, such as to and/or from other apparatus(es), network(s) or the like. The communications interface may be configured to transmit and/or receive information by physical (wired) and/or wireless communications links. Examples of suitable communication interfaces include a network interface controller (NIC), wireless NIC (WNIC) or the like.

Turning back to the end-effector tool 16A, 16B, 16C, the controller 36 may control one machine 18 as well as control the multiple process tools 24A, 24B, 24C, 24D attached to the fixture 22 of the one machine 18. As such, a high rate and/or a high volume of manufacturing processes may be performed by one machine 18 due to the multiple process tools 24A, 24B, 24C, 24D attached to the fixture 22 of one end-effector tool 16A, 16B, 16C, as compared to a machine that has one process tool attached thereto as discussed in the background section above. Due to the compactness of the end-effector tool 16A, 16B, 16C, the machine 18 may have reduced capacities, thus reducing cost. In addition, the machine 18 may allow the use of collaborative machines 18 that have lower payload capacity, which improves manufacturing at a facility.

The controller 36 is configured to control movement of the end-effector tool 16A, 16B, 16C to position the process tools 24A, 24B, 24C, 24D, i.e., the first process tools 24A, the second process tools 24B, etc., relative to the work surface 14 such that the predetermined pattern is aligned at the predetermined location relative to the work surface 14. The controller 36 is also configured to control operation of the first process tools 24A such that the first process tools 24A perform the task to the work surface 14 to form a first processed area 38 at a predetermined location of the work surface 14. Similarly, the controller 36 is also configured to control operation of the second process tools 24B such that the second process tools 24B perform the task to the work surface 14 to form a second processed area 38 at a predetermined location of the work surface 14. Therefore, the controller 36 is configured to control operation of any number of process tools 24A, 24B, 24C, 24D to form the respective processed area 38.

For illustrative purposes, one processed area 38 is shown in FIG. 1, and identified as the first processed area 38, and the machine 18 is aligning the end-effector tool 16A, 16B, 16C at another predetermined location to form another processed area 38, such as the second processed area 38, and so on depending on the desired number of processed areas.

The controller 36 may activate the process tools 24A, 24B, 24C, 24D in any order, and for example, the process tools 24A, 24B, 24C, 24D may be activated individually one at a time, activated in a pattern, each activated simultaneously, or activated in any combination, groupings, etc.

Turning to the positioning sensors 30, the controller 36 may be in communication with the positioning sensors 30 to position the end-effector tool 16A, 16B, 16C relative to the workpiece 12. For example, the controller 36 may use data from the positioning sensors 30 and/or the reference guide(s) 32 to properly align the process tools 24A, 24B, 24C, 24D relative to the work surface 14. In addition, the controller 36 may use data from the positioning sensors 30 to determine whether the workpiece 12 is within the desired quality control.

Once the process tools 24A, 24B, 24C, 24D are aligned in the predetermined location, features may be implemented to secure and/or stabilize the fixture 22 to the workpiece 12. Therefore, for example, the end-effector tool 16A, 16B, 16C may also include an end-effector attachment assembly 40 (see FIGS. 3, 5, 6, and 10) configured to engage the workpiece 12 to secure the end-effector tool 16A, 16B, 16C at the predetermined location. The controller 36 may be in communication with the end-effector attachment assembly 40, and thus, the controller 36 may be used to selectively activate and deactivate the end-effector attachment assembly 40, which will be discussed further below.

Continuing with FIGS. 3, 5, 6, and 10, the end-effector attachment assembly 40 may include a plurality of holders 42 attached to the fixture 22. The holders 42 are configured to engage the workpiece 12 to attach the end-effector tool 16A, 16B, 16C to the workpiece 12 so that one or more manufacturing processes may be performed to the workpiece 12 while the end-effector tool 16A, 16B, 16C is held in place relative to the workpiece 12. In addition, the holders 42 may be configured to absorb energy, dampen vibrations, and/or provide some compliance during operation of the process tools 24A, 24B, 24C, 24D which assists in maintaining the fixture 22, and thus, the process tools 24A, 24B, 24C, 24D in the desired location, and by doing so, reduce or avoid manufacturing distortion of the workpiece 12.

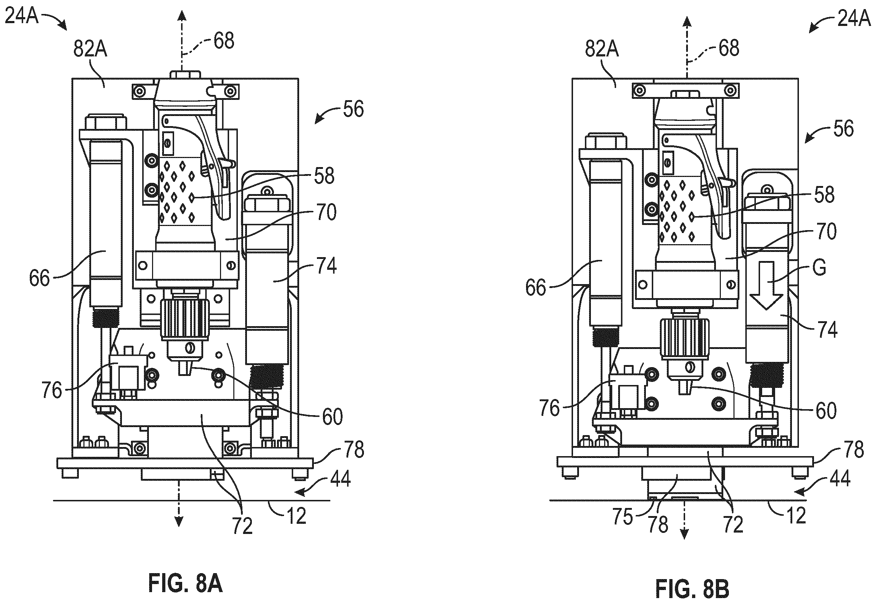

Generally, the holders 42 are spaced from each other around the fixture 22, and more specifically, around the fixture platform 26. The holders 42 may be disposed in a gap 44 (see FIGS. 8A-8D) between the fixture platform 26 and the workpiece 12. That is, the fixture 22 and the fixture platform 26 remain spaced from the workpiece 12 during the manufacturing processes via the holders 42. Any suitable number of holders 42 may be implemented. In certain configurations, the holders 42 are further defined as suction cups. It is to be appreciated that the holders 42 may be any suitable configuration, and suction cups is one example, and other non-limiting examples may include magnets, fasteners through pre-existing holes, expanding mandrel through pre-existing hole(s), mechanism(s) that apply pressure to a backside of the workpiece 12, etc.

Referring to FIG. 2, the end-effector attachment assembly 40 may include a vacuum assembly 46 in fluid communication with the holders 42. More specifically, the vacuum assembly 46 may include a pump 48A and a plurality of conduits 50 connected to the pump 48A. The conduits 50 are also connected to respective holders 42 such that the pump 48A is in fluid communication with the holders 42.

The vacuum assembly 46 may be activated and deactivated by the controller 36, which correspondingly controls whether the holders 42 secure the end-effector tool 16A, 16B, 16C to the workpiece 12. Therefore, the controller 36 is configured to activate the vacuum assembly 46 when the holders 42 engage the workpiece 12 to create suction between the holders 42 and the workpiece 12 to vacuum attach the end-effector tool 16A, 16B, 16C to the workpiece 12 at the predetermined location. That is, when it is desirable to attach the end-effector tool 16A, 16B, 16C to the workpiece 12, the pump 48A of the vacuum assembly 46 may be activated to remove fluid in the space between the holders 42 and the workpiece 12 to create a lower pressure between the holders 42 and the workpiece 12 (as compared to outside of the holders 42 at atmospheric pressure) to suction the holders 42 to the workpiece 12 and attach the end-effector tool 16A, 16B, 16C to the workpiece 12. To detach the end-effector tool 16A, 16B, 16C from the workpiece 12, the pump 48A may be deactivated to allow fluid to fill the space between the holders 42 and the workpiece 12, or the pump 48A may be activated to feed fluid into the space between the holders 42 and the workpiece 12, such that the pressure increases between the holders 42 and the workpiece 12 and the suction is removed to allow the holders 42 to detach from the workpiece 12.

The controller 36 may be configured to activate, deactivate, and/or modulate the vacuum assembly 46 of any of the holders 42 as desired. Furthermore, the controller 36 may be configured to increase or decrease a vacuum pressure to adjust or change a holding force between the respective holders 42 and the workpiece 12. The controller 36 may control the vacuum assembly 46 such that each of the holders 42 may be activated in any suitable arrangement. For example, the holders 42 may be activated individually one at a time, activated in a pattern, each activated simultaneously, or activated in any combination, groupings, etc. The controller 36 may be programmed to control engagement of the holders 42 relative to the workpiece 12. As such, the controller 36 may optimize actuation strategies to manage air consumption and control energy absorption and/or control dampening of vibrations.

Directional flow control valves and pressure regulators may be implemented to control the holders 42, and/or control the sequence that the holders 42 engage the workpiece 12. Therefore, the controller 36 may be in communication with the control valves and the pressure regulators.

As mentioned above, the controller 36 may control the process tools 24A, 24B, 24C, 24D, i.e., the first process tools 24A, the second process tools 24B, etc., as desired. For example, one or more of the process tools 24A, 24B, 24C, 24D may be operated in a sequence, operated in a pattern, operated in a particular order, operated simultaneously, operated randomly, etc. Generally, a portion of each of the first process tools 24A is movable relative to the fixture 22, and may be movable through the fixture platform 26, when the task is performed to the work surface 14. That is, the controller 36 may activate the respective process tools 24A, 24B, 24C, 24D, which may cause the portion of the process tools 24A, 24B, 24C, 24D to move toward or away from the work surface 14. Movement and operation of the process tools 24A, 24B, 24C, 24D, and corresponding features, may be controlled mechanically, pneumatically, hydraulically, electrically, or any other suitable mechanism, and combinations thereof.

In certain configurations, the controller 36 is configured to control operation of each of the process tools 24A, 24B, 24C, 24D, such as the first process tools 24A, the second process tools 24B, etc., simultaneously. Therefore, for example, once the fixture 22 is located relative to the workpiece 12, the controller 36 may activate each of the process tools 24A, 24B, 24C, 24D simultaneously. As such, for example, if each of the process tools 24A are configured to drill a hole 52, activation of the process tools 24A, via the controller 36, may simultaneously drill the predetermined pattern in the workpiece 12 at that predetermined location. As another example, continuing with the drill example, the process tools 24A may be activated in a pattern, such as one at a time or in groups, etc.

As mentioned above, various process tools 24A, 24B, 24C, 24D may be attached to the fixture 22, and more specifically to the fixture platform 26. Furthermore, the process tools 24A, 24B, 24C, 24D may perform various manufacturing processes. As non-limiting examples, the process tools 24A, 24B, 24C, 24D may drill holes 52 and/or countersinks 54, may perform measurements, may apply sealant, coatings, etc., may insert fasteners into the workpiece 12, etc., some of which are discussed below. Various details of these non-limiting examples of the process tools 24A, 24B, 24C, 24D are discussed next.

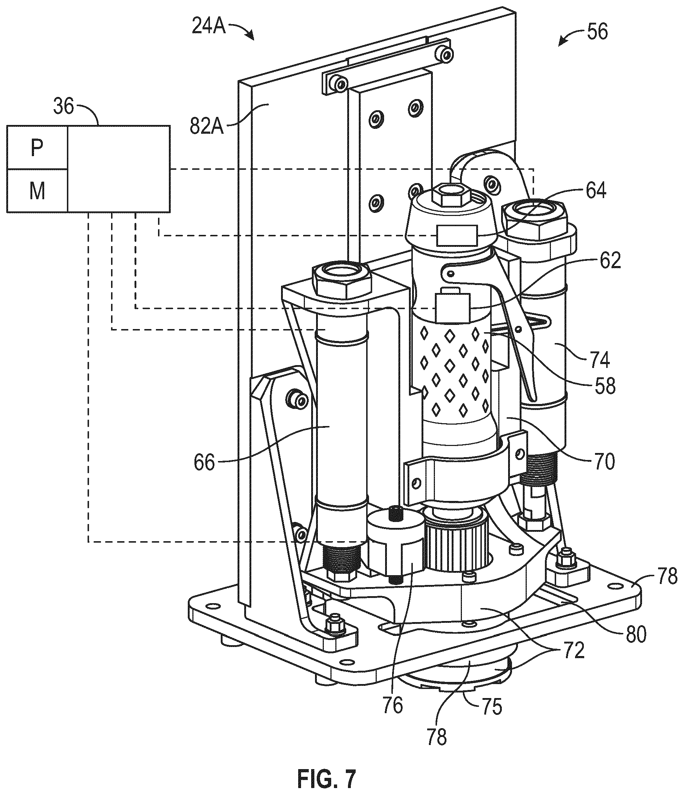

Referring to FIGS. 7, 8A-8D, 9A, and 9B, the process tools 24A may be configured to drill holes 52, and if desired the holes 52 may include the countersink 54, a counterbore, a spotface, etc., in the workpiece 12. Therefore, in certain configurations of the process tools 24A, 24B, 24C, 24D, the process tools 24A may be a drill assembly 56.

In certain configurations, the end-effector tool 16A may have only drill assemblies 56 attached to the fixture 22 as shown in FIG. 6. In other configurations, the end-effector tool 16C may have drill assemblies 56 as well as one or more other process tools 24B, 24C, 24D as shown in FIG. 4.

During the drilling process/operation, forces such as reaction forces, vibrations, torques, etc., may occur in the end-effector tool 16A, 16C, which may transfer to the workpiece 12. To reduce or avoid transfer of these forces, vibrations, torques, etc., to the workpiece 12 during processing, the holders 42, which are the interface between the fixture 22 and the workpiece 12, are configured to absorb energy, dampen vibrations, and/or provide some compliance during operation of the process tools 24A, 24B, 24C, 24D which assists in maintaining the fixture 22, and thus, the process tools 24A, 24B, 24C, 24D in the desired location, and by doing so, reduce or avoid manufacturing distortion of the workpiece 12. As such, the holders 42 may assist in absorbing the reaction forces and/or the vibrations, which may reduce or avoid distortion of the workpiece 12 due to drilling, and/or may assist in minimizing adverse effects during the drilling process/operation. The holders 42 may be any suitable location around one or more of the drill assemblies 56.

If the end-effector tool 16A, 16B has one type of the process tools 24A, 24B, 24C, 24D attached thereto, then in certain configurations, the first process tools 24A may each be the drill assembly 56. If the end-effector tool 16C has more than one type of the process tools 24A, 24B, 24C, 24D attached thereto, then the first process tools 24A or the second process tools 24B, etc., may be the drill assembly 56. In other words, if the first process tools 24A are the drill assembly 56, then the second process tools 24B, 24C, 24D are another type of process tools 24B, 24C, 24D which are not the drill assembly 56. Or, if the first process tools 24B, 24C, 24D are not the drill assembly 56, then the second process tools 24A may be the drill assembly 56.

Referring to FIGS. 6 and 7, each of the process tools 24A, 24B, 24C, 24D, which will be referred to as the first process tools 24A for illustrative purposes, may include the drill assembly 56 configured to form the hole 52 (see FIG. 1) in the work surface 14. More specifically, the drill assembly 56 of each of the first process tools 24A may be configured to form the hole 52 in the work surface 14 such that the first processed area 38 forms a pattern of holes 52 at the predetermined location. Referring to FIG. 1, one non-limiting example of the pattern of the holes 52 is illustrated, which is also a non-limiting example of the first processed area 38 via one placement of one end-effector tool 16A, 16B, 16C.

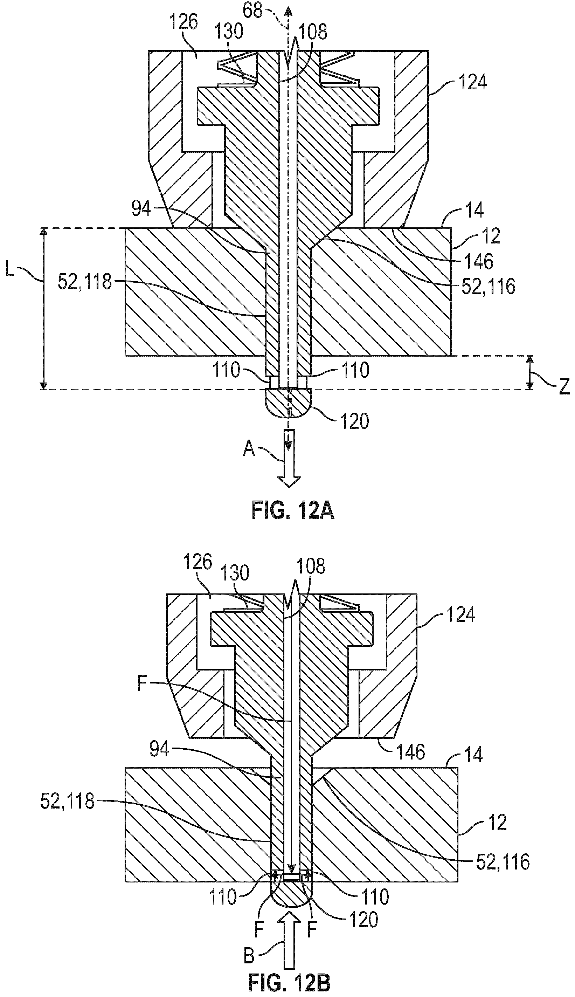

Optionally, the drill assembly 56 of each of the first process tools 24A is also configured to form the countersink 54 (see FIGS. 12A and 12B) aligned with the respective hole 52 of the work surface 14. That is, each of the drill assemblies 56 may form a respective hole 52 and/or a respective countersink 54, in which the hole 52 and respective countersink 54 may occur at the same time, or the hole 52 and the respective countersink 54 may occur in separate operations.

Regardless of the configuration of the holes 52 being formed, the below discussion regarding the features of the drill assembly 56 will apply unless specifically identified otherwise. The features of the drill assembly 56 will be discussed with reference to FIGS. 7 and 8A-8D.

The drill assembly 56 of each of the first process tools 24A may include a drill 58 having a processing bit 60. The drill 58 of each of the process tools 24A is configured to operate the processing bit 60 to form the holes 52 in the work surface 14. Therefore, the processing bit 60 may be a cutter, a punch, or any other suitable processing bit 60 to form the hole 52, the countersink 54, the counterbore, the spotface, etc. Optionally, the processing bit 60 of each of the process tools 24A may be the same configuration of one end-effector tool 16A, 16C to form the same holes 52. Also, optionally, one or more of the processing bit 60 of the respective process tools 24A may be different from each other on one end-effector tool 16A, 16C to form different types of holes 52. In addition, optionally, the processing bit 60 of one or more of the process tools 24A may form one or more different sized holes 52 from each other on one end-effector tool 16A, 16C.

Vibrations may occur during operation of the drill 58 of each of the process tools 24A. Therefore, the drill assembly 56 may include one or more sensors 62 to detect data about vibrations during drilling. The sensors 62 may be any suitable sensors, and non-limiting examples of the sensors 62 may include one or more of vibration sensors, distance sensors, and/or flow sensors. The sensors 62 may be in communication with the controller 36, and the controller 36 may compile, analyze, and/or determine whether the respective drill 58 should be adjusted or stopped. In certain configurations, the controller 36 may compare actual vibration data from operation of the respective drill 58 with a reference vibration profile. The drill 58 of each of the process tools 24A may be individually adjusted via the controller 36, and the adjustments may be the position of the drill 58 and/or the speed of the positive feed drill 58 to drill into the workpiece 12. Alternatively, one or more of the drills 58 may be adjusted by deactivating the desired drills 58, via the controller 36. The reference vibration may be a predetermined threshold of vibration level, which may be any suitable value based on engineering requirements, government requirements, etc. It is to be appreciated that any reference to a threshold herein, the threshold may be any suitable value based on engineering requirements, government requirements, etc.

To operate the processing bit 60, the drill assembly 56 of each of the first process tools 24A may include a drill actuator 64 coupled to the processing bit 60, and the drill actuator 64 is configured to selectively operate the processing bit 60. The controller 36 is configured to control operation of the drill 58 of each of the first process tools 24A such that the processing bit 60 of the respective drill 58 creates the respective hole 52 in the work surface 14 to form the pattern of holes 52 at the predetermined location. Therefore, for example, the controller 36 may control operation of the drill actuator 64 of each of the process tools 24A, which selectively causes rotation, or stops rotation, of the processing bit 60 to cut the work surface 14. The drill actuator 64 may be any suitable configuration, and non-limiting examples may include a motor, such as an electric motor, hydraulic motor, pneumatic motor, etc.

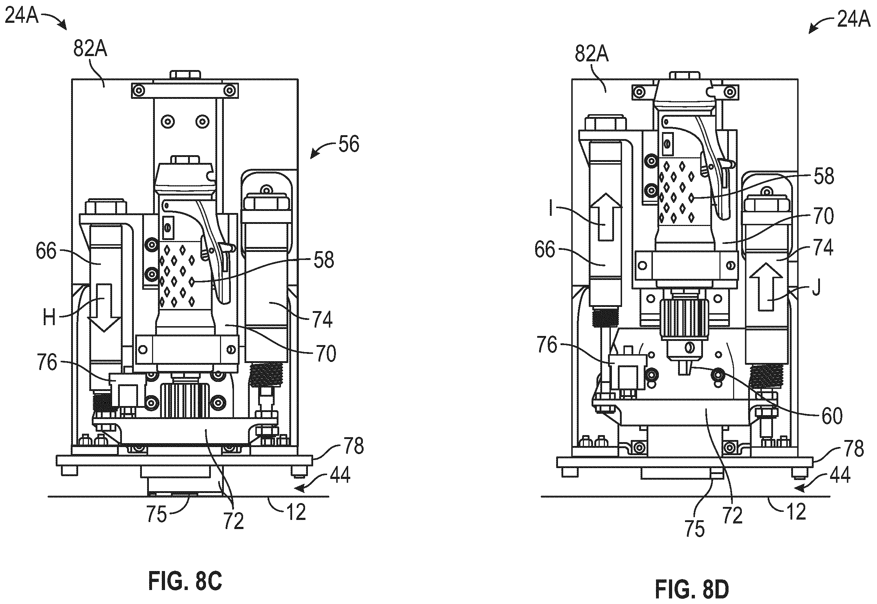

The drill assembly 56 of each of the process tools 24A may be a positive-feed drill assembly (see FIGS. 8A-8D), which may provide drilling thrust. Therefore, the drill assembly 56 of each of the first process tools 24A may include a drill feed actuator 66 coupled to the drill 58, and the drill feed actuator 66 is configured to control movement of the drill 58 relative to the workpiece 12. Therefore, the drill assembly 56 of each of the first process tools 24A may be configured to move the processing bit 60 along a longitudinal axis 68 between a retracted position (see FIGS. 8A and FIGS. 8D) and an extended position (see FIG. 8C). That is, the drill 58 and the corresponding processing bit 60 is movable toward and away from the workpiece 12, via the drill feed actuator 66, depending on the stage of forming the hole 52. As shown in FIG. 8C, the drill feed actuator 66 is activated to move the drill 58 in the direction of arrow H to perform the operation to the workpiece 12. When the drilling process is complete, the drill feed actuator 66 is activated to move the drill 58 in the direction of arrow I back to the retracted position. The controller 36 is in communication with the drill feed actuator 66 of each of the process tools 24A to control movement of the respective drill 58 along the longitudinal axis 68.

The drill feed actuator 66 of the process tools 24A may be any suitable configuration, and non-limiting examples of the drill feed actuator 66 may include mechanical actuator, pneumatic actuator, hydraulic actuator, electrical actuator, motor, or any other suitable mechanism.

Referring to FIGS. 8A-8D, the drill assembly 56 of each of the first process tools 24A may include a drill feed bracket 70 attached to the drill 58 and the drill feed actuator 66 such that the drill feed bracket 70 and the drill 58 are movable concurrently with each other via the drill feed actuator 66. Therefore, the drill feed bracket 70 of the process tools 24A supports the respective drill 58.

Features may also be implemented to assist in stabilizing the drill assembly 56 of each of the process tools 24A during the drilling operation. Therefore, referring to FIGS. 7 and 8A-8D, the drill assembly 56 of each of the first process tools 24A may include a clamp 72 coupled to the respective drill 58 and a clamp actuator 74 attached to the respective clamp 72. The clamp actuator 74 of the drill assembly 56 of each of the first process tools 24A is configured to move the respective clamp 72 in the direction of arrow G to a locked position (see FIGS. 8B and 8C) in which the respective clamp 72 engages the workpiece 12 in the locked position to stabilize the respective drill 58 relative to the work surface 14 during drilling, and an unlocked position (see FIGS. 8A and 8D) in which the clamp 72 is spaced apart from the workpiece 12 in the unlocked position, where the clamp 72 moves in the direction of arrow J. That is, a face 75 of the respective clamp 72 engages the workpiece 12 when in the locked position. During the drilling operation, the clamp 72 of the process tools 24A applies pressure to the work surface 14, via operation of the respective clamp actuator 74, to provide stability of the respective drill 58 relative to the work surface 14, which assists in reducing or preventing deformation of the holes 52, and/or assists in reducing or preventing chattering of the work surface 14 during drilling. The controller 36 is in communication with the clamp actuator 74 of each of the process tools 24A to control operation of the respective clamp actuator 74, and thus, control movement of the respective clamp 72.

The clamp actuator 74 of the process tools 24A may be any suitable configuration, and non-limiting examples of the drill feed actuator 66 may include mechanical actuator, pneumatic actuator, hydraulic actuator, electrical actuator, motor, or any other suitable mechanism.

The drill assembly 56 of each of the first process tools 24A may include a feed stop 76 which limits movement of the drill 58 toward the workpiece 12 when the drill feed bracket 70 engages the feed stop 76. Generally, the feed stop 76 of the process tools 24A is disposed between the respective drill feed bracket 70 and the workpiece 12. In certain configurations, the respective feed stop 76 may be fixed to the respective clamp 72, and in this configuration, a portion of the drill feed bracket 70 engages the feed stop 76 when a maximum feed distance is reached. It is to be appreciated that the feed stop 76 of the process tools 24A may be fixed to any suitable structure to limit movement of the respective drill 58 toward the workpiece 12.

Also, optionally, the feed stop 76 of each of the process tools 24A may be adjustable to accommodate a different maximum feed distance of the respective drill 58. By adjusting the feed stop 76 of the process tools 24A, different countersink 54 depths may be accommodated, and/or tuning of the countersink 54 may be accommodated. That is, the height of the feed stop 76 of each of the process tools 24A may be adjustable along the longitudinal axis 68 to change the maximum feed distance of the respective drill 58.

In this configuration, the feed stop 76 of one or more of the process tools 24A may be adjusted manually or automatically by one or more actuators. When the feed stop 76 of one or more of the process tools 24A is adjustable via the respective actuators, then the controller 36 may be in communication with the respective actuators to control movement of the respective feed stop 76.

Referring to FIG. 6, the drill assembly 56 of each of the first process tools 24A may include a platform 78 attached to the fixture 22 of the end-effector tool 16A, 16C. The platform 78 fixes the process tools 24A, 24B, 24C, 24D to the end-effector tool 16A, 16B, 16C such that movement of the end-effector tool 16A, 16B, 16C moves the entire set of the process tools 24A, 24B, 24C, 24D to the desired location. In certain configurations, the platform 78 of each of the process tools 24A, 24B, 24C, 24D is attached to the fixture platform 26.

Turning to FIG. 7, the platform 78 of the process tools 24A may define an opening 80 configured to allow movement of the respective clamp 72 through the respective opening 80 between the locked position and the unlocked position, and configured to allow movement of the respective drill 58 through the respective opening 80 between the retracted position and the extended position. That is, the opening 80 of the platform 78 of the process tools 24A provides access to the work surface 14.

Continuing with FIG. 7, the drill assembly 56 of each of the first process tools 24A may include a support bracket 82A attached to the respective platform 78. The support bracket 82A of each of the process tools 24A may extend outwardly away from the platform 78 and may extend away from the workpiece 12. The support bracket 82A of each of the process tools 24A generally supports the respective drill assembly 56 relative to the fixture 22. The support bracket 82A of the process tools 24A may be fixed to the respective platform 78 or coupled to the respective platform 78 to allow compliance as will be discussed further below.

Continuing with FIG. 7, the clamp actuator 74 and the drill feed actuator 66 of each of the process tools 24A are fixed to the respective support bracket 82A. Therefore, when the respective clamp actuator 74 is activated, the respective clamp 72 is movable relative to the respective support bracket 82A and the respective platform 78. In addition, when the respective drill feed actuator 66 is activated, the respective drill feed bracket 70 and the corresponding drill 58 are movable relative to the respective support bracket 82A and the respective platform 78.

In addition, optionally, the drill assembly 56 of each of the process tools 24A may be equipped with features to allow for adaptive drilling, in which the controller 36 may compile data and analyze the data to determine if one or more of the drill assemblies 56 should deviate from the normal operating procedure. For example, operation of one or more of the drill assemblies 56 may be delayed or stopped if insufficient power or air supply is delivered to the respective drill assembly 56. As another example, operation of one or more of the drill assemblies 56 may be delayed or stopped if excess vibrations occur during operation.

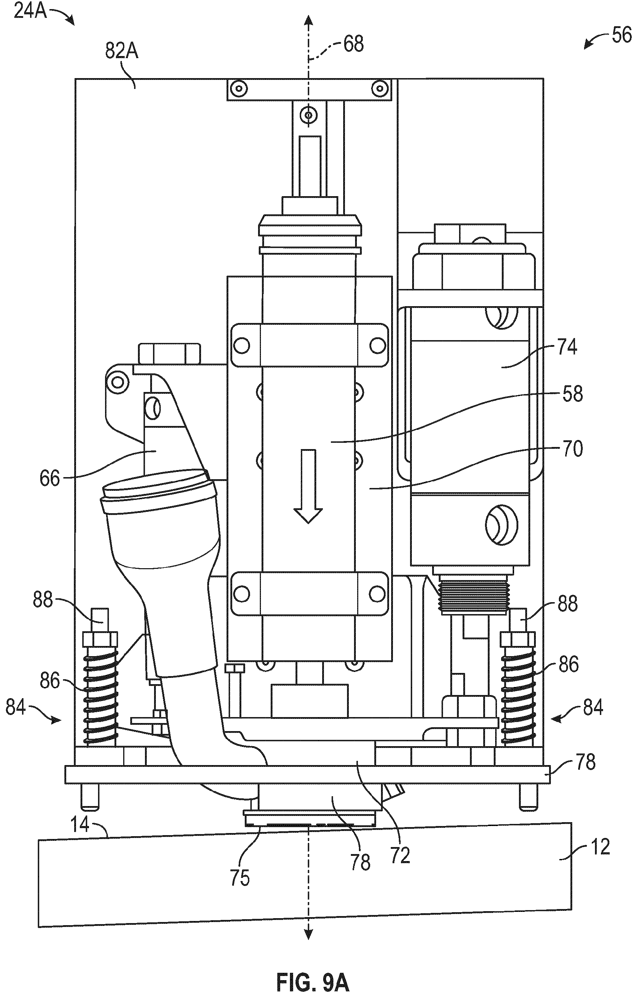

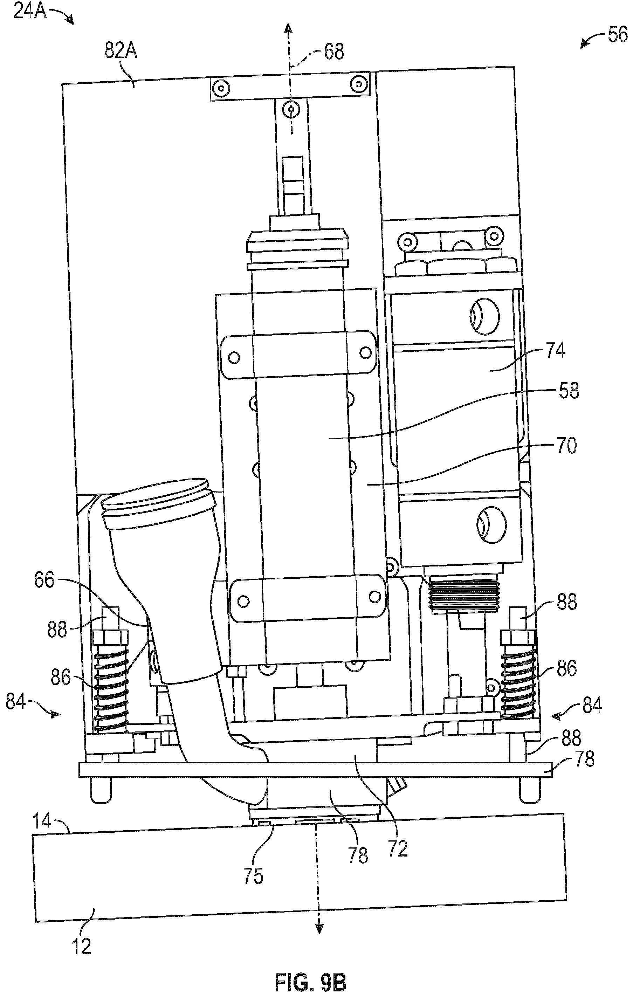

Optionally, referring to FIGS. 9A and 9B, the drill assembly 56 of each of the process tools 24A may include a compliance assembly 84 configured to allow compliance of the drill 58 relative to workpiece 12. That is, if the work surface 14 is not square to the respective drill 58 prior to the drilling operation, the compliance assembly 84 allows the drill 58 to self-align with the work surface 14. In other words, the compliance assembly 84 allows the respective drill 58 to passively normalize the processing bit 60 to the work surface 14. To do so, the compliance assembly 84 of each of the process tools 24A may include a plurality of biasers 86, such as biasing members, which allows relative movement between the respective platform 78 and the respective support bracket 82A. The biasers 86 may be any suitable configuration, and non-limiting examples may include coil springs, leaf springs, rubber contacts, air cushions, expandable/retractable bladders, active compliance mechanism such as a compliance mechanism activated via one or more actuators, other passive compliance mechanisms, etc., and combinations thereof.

The compliance assembly 84 of each of the process tools 24A also includes a plurality of connectors 88 fixed to the respective platform 78 and coupled to the respective support bracket 82A such that the respective support bracket 82A is movable relative to the respective platform 78. One or more biasers 86 are attached to the connectors 88 and are spring-loaded to continuously apply a biasing force to the respective support bracket 82A. Therefore, the biasers 86 of each of the process tools 24A are spring-loaded on the connectors 88 to maintain the respective drill 58 normal to the platform 78 as shown in FIG. 9A. However, as shown in FIG. 9B, as the respective drill assembly 56 approaches the work surface 14, the work surface 14 is not normal to the platform 78, nor normal to the respective drill 58. Therefore, as the respective clamp 72 applies pressure to the workpiece 12, the biasers 86 of the process tools 24A allow the respective support bracket 82A to move (i.e., tilt, rise, etc.) relative to the respective platform 78, which correspondingly allows the respective drill 58 to move relative to the respective platform 78 to normalize the processing bit 60 relative to the work surface 14. As such, the compliance assembly 84 of each of the process tools 24A may passively normalize the respective processing bit 60 to the work surface 14 when the respective clamp 72 is in the locked position, which correspondingly self-aligns the holes 52, the countersinks 54, etc., relative to the work surface 14.

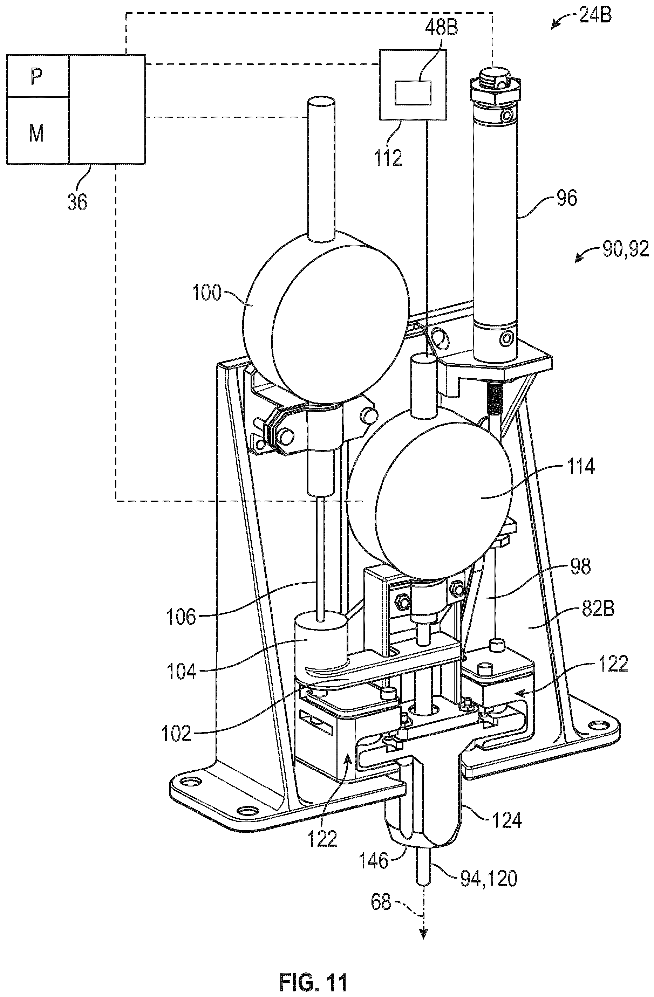

Referring to FIGS. 11, 12A, 12B, 13, 14A, 14B, 15A-15B, and 16, the process tools 24A, 24B, 24C, 24D may be configured to measure characteristics of the workpiece 12. Therefore, in certain configurations of the process tools 24A, 24B, 24C, 24D, the process tools 24B may be a measuring device 90.

In certain configurations, the end-effector tool 16C may have measuring devices 90 as well as one or more other process tools 24A, 24C, 24D, such as the drill assemblies 56, as shown in FIG. 4. If the end-effector tool 16C has more than one type of the process tools 24A, 24B, 24C, 24D attached thereto, then the first process tools 24A may be the measuring device 90 and the second process tools 24B may be another type of process tools 24A, 24C, 24D, or the second process tools 24B may be the measuring device 90 and the first process tools 24A may be another type of process tools 24A, 24C, 24D, depending on the number of the process tools 24A, 24B, 24C, 24D being implemented.

In other configurations, the end-effector tool 16B may have only measuring devices 90 attached to the fixture 22 as shown in FIG. 10. If the end-effector tool 16B has one type of the process tools 24A, 24B, 24C, 24D attached thereto, then the first process tools 24A may each be the measuring device 90. Therefore, for example, depending on the process tools 24A, 24B, 24C, 24D attached to the end-effector tool 16B, 16C, the measuring device 90 may be referred to as the first process tools 24A or the second process tools 24B. For illustrative purposes, the figures identify the first process tools 24A as the drill assemblies 56 and the second process tools 24B as the measuring devices 90, but again, as indicated herein, these process tools 24A, 24B may be identified in the reverse. The below discussion will refer to the measuring device 90 as the second process tools 24B, but it is to be appreciated that the measuring device 90 may be referred to as the first process tools 24A in certain situations.

Referring to FIG. 11, each of the second process tools 24B may include the measuring device 90 configured to measure characteristics of the workpiece 12. The measuring device 90 may be various configurations, and non-limiting examples may include one or more of a camera assembly, a vision assembly, a distance sensor, a probe assembly 92, a linear scale, an optical distance sensor, an ultrasonic distance sensor, a magnetic strip, etc., and combinations thereof, to measure various characteristics of the workpiece 12. For illustrative purposes, the probe assembly 92 is discussed below, but it is to be appreciated that other configurations of the measuring device 90 may be attached to the fixture 22 to measure the desired characteristics of the workpiece 12. For example, the measuring device 90 of the process tools 24B may be configured to measure the size of the respective holes 52, depth of the respective holes 52, surface quality of the respective holes 52, surface quality of the work surface 14 and/or the workpiece 12, quality of the material of the workpiece 12, etc.

Referring to FIG. 11, in certain configurations, the measuring device 90 of each of the second process tools 24B may include the probe assembly 92 configured to measure characteristics of the workpiece 12. That is, the probe assembly 92 may be configured to measure characteristics of the hole 52 of the workpiece 12. Therefore, to operate the probe assembly 92, the holes 52 of the workpiece 12 are formed first. As such, the work surface 14 of the workpiece 12 defines a plurality of holes 52 before the measuring device 90 is operated.

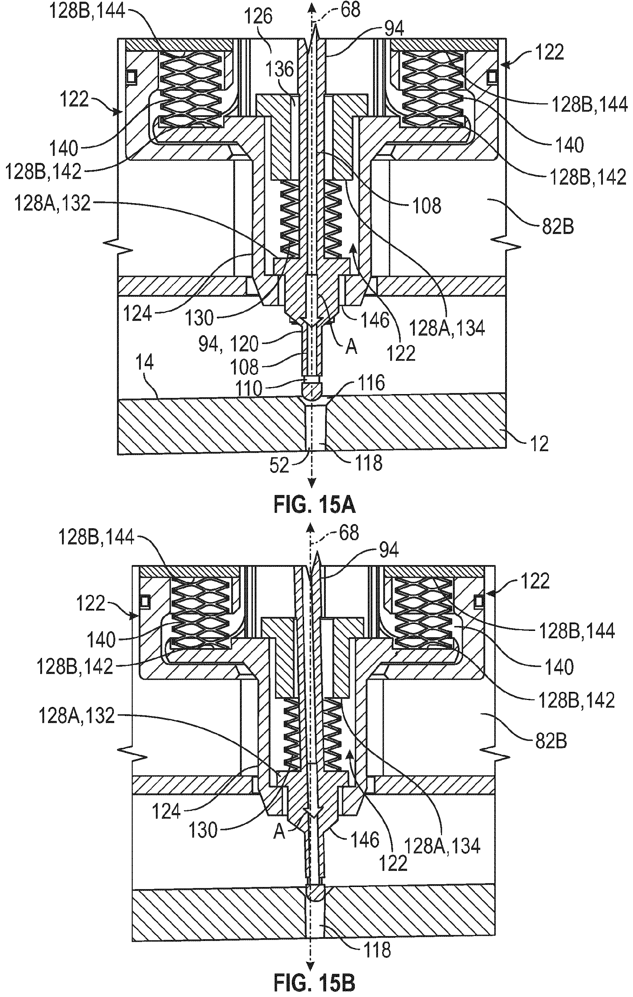

Continuing with FIG. 11, the probe assembly 92 of each of the second process tools 24B may include a support bracket 82B attached to the fixture 22, or more specifically, attached to the fixture platform 26. The support bracket 82B of each of the process tools 24B may extend outwardly away from the workpiece 12. The support bracket 82B of each of the process tools 24B generally supports the respective probe assembly 92 relative to the fixture 22. The holders 42, which are the interface between the fixture 22 and the workpiece 12, are disposed in the gap 44 (see FIGS. 15A-15B) between the fixture platform 26 (and/or the support bracket 82B) and the workpiece 12.

The probe assembly 92 of each of the process tools 24B may include a probe 94 configured to measure characteristics of the workpiece 12. More specifically, the probe assembly 92 of each of the second process tools 24B may include the probe 94 insertable into the respective hole 52 of the work surface 14 to measure characteristics of the respective hole 52 (see FIGS. 12A and 12B). In certain configurations, each of the second process tools 24B may include the probe assembly 92, and associated features, in other configurations, each of the second process tools 24B may include the probe assembly 92.

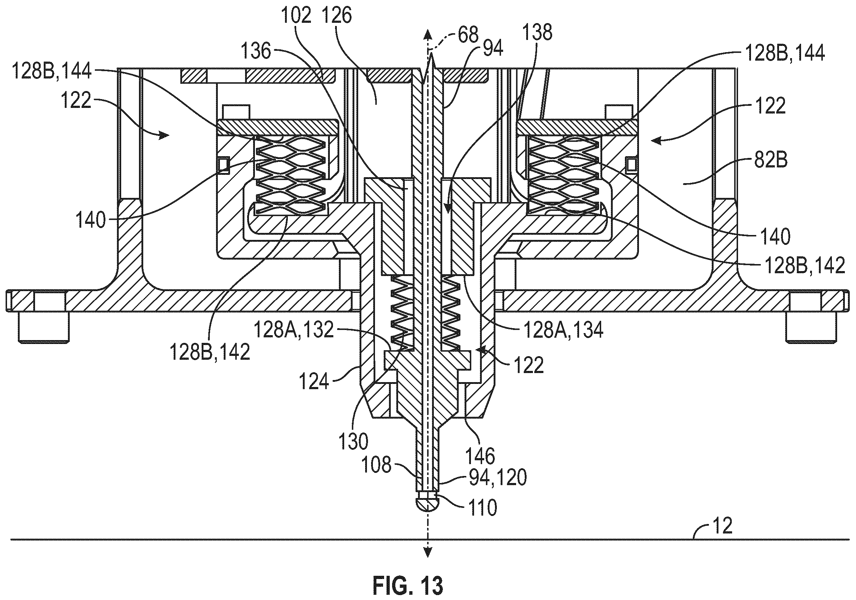

As indicated above, in certain configurations, the probe assembly 92 is movable relative to the fixture 22, toward and away from the workpiece 12. Therefore, the probe assembly 92 of each of the process tools 24B may be configured to move the probe 94 along the longitudinal axis 68 between a retracted position (see FIG. 13) and an extended position (see FIG. 12A). The extended position of the respective probe 94 may be when the probe 94 is fully seated in the respective holes 52 and/or fully seated in the respective countersinks 54 of the respective holes 52. Alternatively, the extended position of the respective probe 94 may be when the probe 94 is inserted a desired distance into the respective holes 52.

Furthermore, the probe assembly 92 of each of the second process tools 24B may include a probe feed actuator 96 coupled to the probe 94 and fixed to the respective support bracket 82B of the respective probe assembly 92. Therefore, the respective support bracket 82B supports the respective probe feed actuator 96. The probe feed actuator 96 of each of the process tools 24B may be configured to move the probe 94 along the longitudinal axis 68 between the retracted position and the extended position. That is, the probe 94 is movable toward and away from the workpiece 12, via the drill feed actuator 66, depending on the stage of forming the hole 52. The controller 36 is in communication with the probe feed actuator 96 of each of the process tools 24B to control movement of the respective probe 94 along the longitudinal axis 68. The probe feed actuator 96 of the process tools 24B may be any suitable configuration, and non-limiting examples of the probe feed actuator 96 may include mechanical actuator, pneumatic actuator, hydraulic actuator, electrical actuator, motor, or any other suitable mechanism.

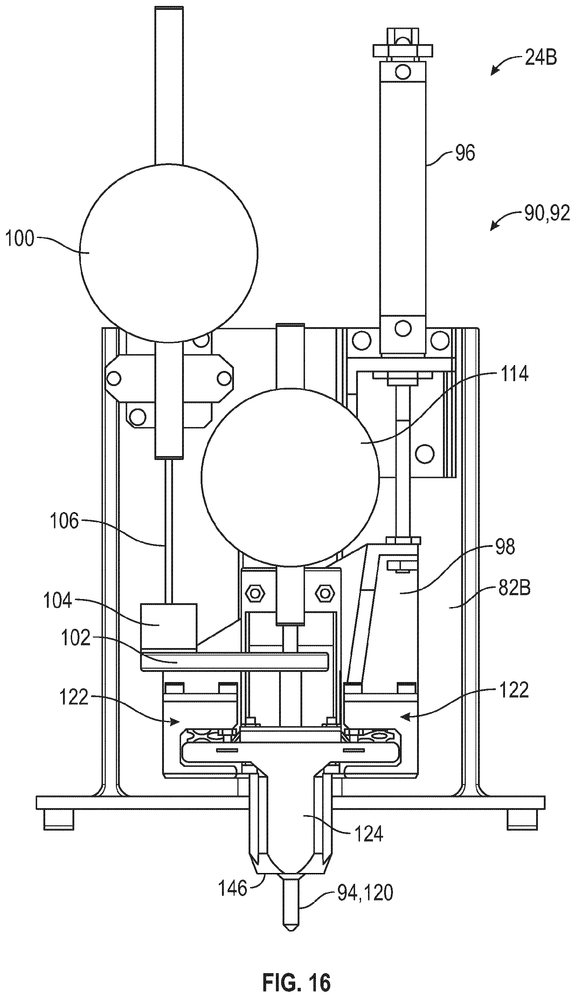

Referring to FIGS. 11 and 16, the probe assembly 92 of each of the second process tools 24B may include a probe feed bracket 98 coupled to the respective probe 94 to move the respective probe 94 relative to the workpiece 12. Therefore, the respective probe feed bracket 98 may move the respective probe 94 between the retracted position and the extended position.

The probe feed bracket 98 may also be coupled to the respective probe feed actuator 96 such that the respective probe feed bracket 98 and the respective probe 94 are movable concurrently with each other via the probe feed actuator 96. Therefore, the probe feed bracket 98 of the process tools 24B supports the respective probe 94. The probe feed actuator 96 of each of the process tools 24B is configured to causes movement of the respective probe feed bracket 98 and the respective probe 94 between the retracted position and the extended position.

Turning back to FIG. 11, the probe assembly 92 of each of the second process tools 24B may include a first sensor 100 coupled to the respective probe 94 to measure a depth of the respective holes 52. The first sensor 100 of each of the second process tools 24B is fixed to the respective support bracket 82B. Therefore, the respective support bracket 82B supports the respective first sensor 100.

In addition, the probe assembly 92 of each of the second process tools 24B may include a probe cap 102 attached to the respective probe 94 such that the respective probe cap 102 moves with the respective probe 94 between the retracted position and the extended position. The probe cap 102 is configured to provide a repeatable surface to make measurement against. The first sensor 100 of the probe assembly 92 of each of the second process tools 24B is configured to determine the depth of the respective holes 52 based on the position of the respective repeatable surface of the respective probe cap 102.

The probe cap 102 of each of the second process tools 24B may include a finger 104 connected to the respective first sensor 100, and the respective finger 104 may include the repeatable surface. The first sensor 100 compiles data from the position of the respective repeatable surface of the respective finger 104 relative to the respective first sensor 100. In addition, the first sensor 100 of each of the second process tools 24B may include a rod 106 connected to the respective finger 104, and movement of the respective finger 104 causes movement of the respective rod 106, in which the respective first sensor 100 compiles the distance that the respective finger 104 travels on the respective rod 106.

Referring to FIGS. 12A and 12B, the probe 94 of each of the second process tools 24B may define a channel 108 and one or more outlets 110 in fluid communication with the channel 108. The channel 108 and the outlets 110 of the respective probe 94 allow fluid communication through and outside of the respective probe 94.

The probe assembly 92 of each of the process tools 24B may include a pressure gauge 112 assembly, which may be implemented to provide and/or determine measurements about the workpiece 12. Generally, the pressure gauge 112 assembly is in communication with the controller 36.

The pressure gauge 112 assembly may include a pump 48B in fluid communication with the respective probes 94, such as a gaseous pump, to deliver a gaseous fluid, such as air or any other suitable gaseous fluid, through the respective channel 108 and out of the outlets 110 of the respective probe 94. The controller 36 may be in communication with the pump 48B to control operation of the pump 48B, and thus, selectively deliver gaseous fluid and selectively stop delivery of the gaseous fluid through the respective probe 94. The depth of the respective holes 52 and the depth of the respective countersink 54 are determined using information from air flow through the respective probes 94 as will be discussed further below with reference to FIGS. 12A and 12B. It is to be appreciated that in certain configurations one pump 48A may be implemented to control both the suction of the holders 42 as well as the pressure gauge 112, and in this configuration, valves may be implemented to selectively direct the fluid to the desired locations. In other configurations, separate pumps 48A, 48B may be implemented to control the suction of the holders 42 and the pressure gauge 112 separately.

Optionally, the holes 52 of the workpiece 12 may also have the countersink 54, in which case, a second sensor 114 (see FIG. 11) may be implemented to measure a depth of the countersink 54. The pressure gauge 112 assembly may include the first sensor 100 and the second sensor 114.

In certain configurations, as identified in FIG. 12B, each of the holes 52 may include a countersink portion 116 and a second portion 118. Generally, the countersink portion 116 and the second portion 118 of each of the holes 52 have different outer diameters. For example, the outer diameter of the second portion 118 may be smaller than the outer diameter of the countersink portion 116. That is, the countersink portion 116 may taper to the second portion 118, as best shown in FIG. 12B.

The probe assembly 92 of each of the second process tools 24B may include the second sensor 114 coupled to the respective probe 94 to measure the depth of the countersink portion 116 of the respective holes 52. The second sensor 114 of each of the second process tools 24B may determine the depth of the countersink 54 of the respective holes 52 by measuring the distance between the respective probe 94 and a surface reference of the respective probe 94, which is compared to a known calibrated hole 52 reference.

The first sensor 100 and the second sensor 114 of each of the process tools 24B may be in communication with the controller 36 such that the controller 36 may compile data and analyze the data to determine if the measurements, including depth measurements, are within predetermined tolerances of the respective holes 52 and the respective countersinks 54.

Operation of the respective probe 94 and the pump 48B will be made with reference to FIGS. 12A and 12B. The respective probe 94 moves, via actuation of the respective probe feed actuator 96, from the retracted position to the extended position, as indicated by arrow A in FIG. 12A. In this position, when the respective holes 52 have a countersink 54, the respective probe 94 is fully seated in the respective countersink 54, again, as shown in FIG. 12A. While the respective probe 94 is in the extended position, if the pump 48B is activated, via the controller 36, the gaseous fluid is pumped through the respective probe 94 and out of the respective outlets 110. Since the outlets 110 are beyond the respective holes 52 as shown in FIG. 12A, the air flow is unrestricted (i.e., high flow) so the pressure reading is low (i.e., low back pressure). A first measurement Z is determined as the distance between the respective probe 94 being fully seated and when an air flow (via operating the pump 48B which pumps the gaseous fluid out the outlets 110 of the respective probe 94) first becomes restricted via the respective holes 52 as the respective probe 94 is retracted back through the respective holes 52.

The depth of the respective holes 52 is based on a known length L of a tip 120 of the respective probe 94 minus the first measurement Z (see FIG. 12A). The respective first sensor 100 may measure a position of the respective probe 94 and by measuring where the air pressure and air flow changes, the controller 36 may calculate or determine how deep the respective hole 52 is.

Next, while the air flow (the air flow is identified as arrows F in FIG. 12B) remains on, the controller 36 activates the probe feed actuator 96 to retract the respective probe 94 toward the retracted position (as indicated by arrow B in FIG. 12B), in which the outlets 110 of the respective probe 94 moves inside of the respective holes 52. When this occurs, the air flow is restricted (i.e., decreased or reduced flow as compared to unrestricted air flow) so the pressure reading is higher (i.e., higher back pressure as compared to unrestricted air flow) than the previous pressure reading that was outside of the respective holes 52 because the outlets 110 are moving through the inside of the respective holes 52.

This higher pressure reading provides hole 52 diameter information for the respective holes 52 by identifying the length of travel of the respective probe 94 through the respective holes 52. For example, if the air pressure changes beyond a threshold as the respective probe 94 travels within the respective holes 52, that may indicate an abnormality with the respective holes 52 and/or a quality issue with the respective holes 52.

Once the respective probes 94 exit the respective holes 52, the controller 36 may deactivate the pump 48B to stop the fluid flow through of the respective probes 94. Also, the controller 36 may deactivate the respective probe feed actuator 96 to stop movement of the respective probes 94 to the retracted position.

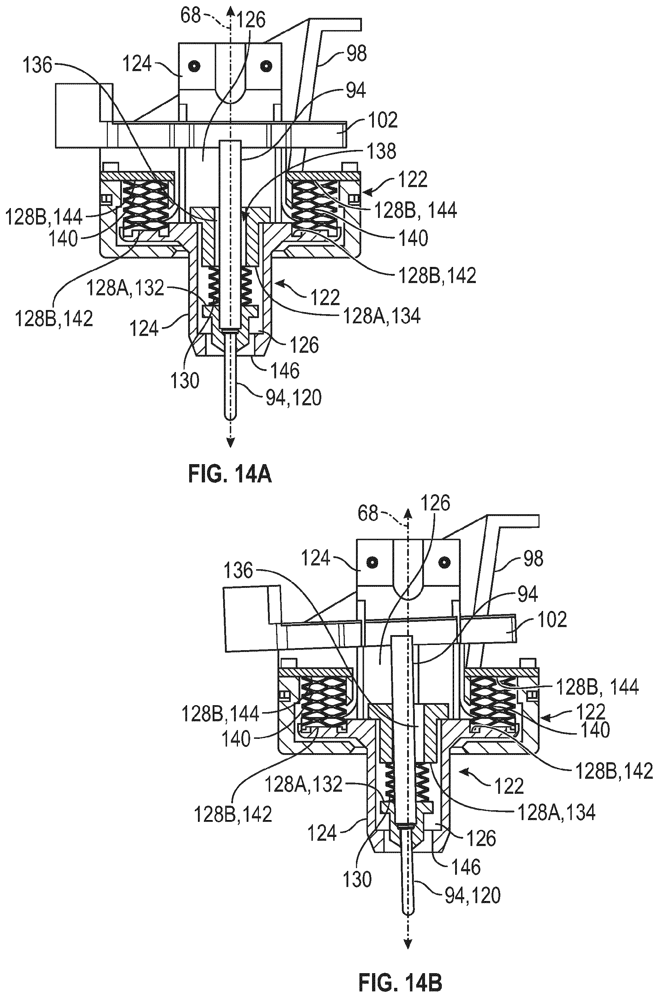

Sometimes alignment of one or more of the process tools 24A, 24B, 24C, 24D needs slight adjustment. Therefore, referring to FIGS. 14A, 14B, and 15A-15B, the process tools 24B may include a self-alignment compliance assembly 122 configured to allow compliance of the measuring device 90 to position the measuring device 90 in the desired location so that the measuring device 90 may measure various characteristics of the workpiece 12. More specifically, the probe assembly 92 of each of the second process tools 24B may include the self-alignment compliance assembly 122 coupled to the respective probe 94 to allow compliance of the respective probe 94 relative to the workpiece 12 to accommodate one or more workpiece 12 tolerances as the respective probe 94 enters, or is inserted into, the respective holes 52. Generally, the self-alignment compliance assembly 122 of each of the process tools 24B provides a passive compliance feature.

Referring to FIGS. 14A and 14B, the self-alignment compliance assembly 122 of the probe assembly 92 of each of the second process tools 24B may include a housing 124 defining a cavity 126 along the longitudinal axis 68, and the respective probe 94 is disposed through the respective cavity 126. The respective housing 124 is fixed to the respective probe feed bracket 98 such that the respective housing 124 moves concurrently with the respective probe feed bracket 98. Furthermore, the tip 120 of the respective probe 94 extends outside of the respective housing 124 (see FIGS. 11 and 16).

As best shown in FIGS. 15A and 15B, the self-alignment compliance assembly 122 of the process tools 24B may include features that allow the respective probe 94 to move relative to the probe feed bracket 98, and thus, move relative to the housing 124. More specifically, the self-alignment compliance assembly 122 of the process tools 24B may implement reaction surfaces 128A, 128B and one or more biasers 130, 140 that cooperate with each other to provide the independent movement of the respective probe 94 relative to the probe feed bracket 98, which provides passive self-alignment of the respective probe 94 relative to the respective holes 52, as detailed below.

Turning to FIGS. 14A and 14B, the self-alignment compliance assembly 122 of the probe assembly 92 of each of the second process tools 24B may include a first biasing member 130 disposed between a plurality of first reaction surfaces 128A within the respective housing 124 to allow tilting of the respective probe 94 relative to the longitudinal axis 68 such that the respective probe 94 self-aligns to the workpiece 12 as the respective probe 94 is inserted into the respective holes 52. Generally, as best shown in FIG. 15B, the respective first biasing member 130 is disposed between a pair of the respective first reaction surfaces 128A. As such, the respective first biasing member 130 reacts against the respective first reaction surfaces 128A.

As shown in FIG. 15A, the first reaction surfaces 128A and the respective first biasing member 130 are disposed inside of the cavity 126 of the respective housing 124. The respective first biasing member 130 are spring-loaded to continuously apply a biasing force to the respective probe 94 to an initial position, which assists in substantially aligning the respective probe 94 along the longitudinal axis 68 (see FIG. 15A). In certain configurations, when the respective probe 94 is in the initial position, the respective probe 94 may be concentric or may be coaxial to the longitudinal axis 68. In addition, the respective first biasing member 130 continuously biases the respective probe 94 outwardly such that the tip 120 of the respective probe 94 is exposed outside of the respective housing 124 when in the initial position.

Continuing with FIG. 15A, in certain configurations, the self-alignment compliance assembly 122 may include a first ledge 132 attached to, or fixed to, the respective probe 94, and the respective first ledge 132 includes one of the respective first reaction surfaces 128A. Therefore, the respective first biasing member 130 biases against the respective first ledge 132.

In addition, the self-alignment compliance assembly 122 may include a second ledge 134 attached to, or fixed to, the housing 124 inside of the cavity 126, and the respective second ledge 134 includes another one of the first reaction surfaces 128A. Therefore, the respective first biasing member 130 biases against the respective second ledge 134.

In certain configurations, the respective first ledge 132 and the respective second ledge 134 align with each other in a spaced apart relationship, and the respective first reaction surfaces 128A face each other. Therefore, the respective first biasing member 130 may be disposed between the respective first ledge 132 and the respective second ledge 134, and reacts against the respective first reaction surfaces 128A to continuously bias the respective probe 94 to the initial position.

Continuing with FIG. 15A, the respective second ledge 134 may define an aperture 136 having a boundary larger than an outer diameter of the respective probe 94 to present a void 138 between the respective probe 94 and the respective second ledge 134 to allow the probe 94 to tilt within the aperture 136 (see FIG. 15B).

Referring to FIGS. 14A and 14B, in certain configurations, the probe feed bracket 98 of the probe assembly 92 of each of the second process tools 24B may include a plurality of second reaction surfaces 128B spaced apart from each other. Also, the self-alignment compliance assembly 122 of the probe assembly 92 of each of the second process tools 24B may include a plurality second biasing members 140. The respective second reaction surfaces 128B and the respective second biasing members 140 may provide independent movement of the respective housing 124 relative to the probe feed bracket 98, which provides passive self-alignment of the respective housing 124 relative to the work surface 14, as detailed below. The second biasing members 140 may be the same type of biasers 130, 140 or different type of biasers 130, 140 as the first biasing members 130. The biasers 130, 140, i.e., the first biasing members 130 and the second biasing members 140, may be any suitable configuration, and non-limiting examples may include coil springs, leaf springs, rubber contacts, elastomers, air cushions, expandable/retractable bladders, magnets, pneumatic mechanisms, etc., and combinations thereof.

Generally, as best shown in FIG. 14B, at least one of the respective second biasing members 140 are disposed between a pair of the respective second reaction surfaces 128B, and at least another one of the respective second biasing members 140 are disposed between another pair of the respective second reaction surfaces 128B. The respective second biasing members 140 are spring-loaded to continuously apply a biasing force to assist in returning the respective probe 94 to the initial position, i.e., return the respective probe 94 to align along the longitudinal axis 68, and more specifically to return the respective housing 124 back to an initial position (the initial position of the housing 124 is shown in FIG. 15A). As such, the respective second biasing members 140 react against the respective second reaction surfaces 128B to continuously bias the respective housing 124 to the initial position.

Referring to FIGS. 14A and 14B, in certain configurations, the probe feed bracket 98 of each of the second process tools 24B have one or more of the second reaction surfaces 128B, and the housing 124 of each of the second process tools 24B have one or more other ones of the second reaction surfaces 128B. More specifically, in certain configurations, the housing 124 of the probe assembly 92 of each of the second process tools 24B may include a flange 142, and the respective flange 142 may present one or more of the second reaction surfaces 128B. As best shown in FIG. 14B, each of the second biasing members 140 of the self-alignment compliance assembly 122 of each of the second process tools 24B are disposed between the respective flange 142 (of the respective housing 124) and at least another one of the respective pair of the second reaction surfaces 128B to provide compliance of the respective probe 94 relative to the workpiece 12 which assists in self-aligning the respective housing 124 relative to the workpiece 12 as the respective probe 94 is inserted into the respective holes 52. In various configurations, the respective housing 124 may include a plurality of flanges 142, and each of the flanges 142 may provide one or more of the second reaction surfaces 128B.

Continuing with FIG. 14B, in certain configurations, the probe feed bracket 98 of the probe assembly 92 of each of the second process tools 24B may include a plate 144 spaced from the respective flange 142, and the respective plate 144 may present one or more other ones of the second reaction surfaces 128B. Therefore, the respective second biasing members 140 may be disposed between the respective flange(s) 142 and the respective plate 144 such that the respective flange(s) 142 and the respective plate 144 provide the respective second reaction surfaces 128B. The respective second biasing members 140 are spring-loaded to continuously apply the biasing force to the respective flange(s) 142 and the respective plate 144 to assist in returning the respective housing 124 to the initial position and/or return the respective probe 94 to the initial position to align along the longitudinal axis 68. As such, the respective second biasing members 140 react against the respective second reaction surfaces 128B of the flange(s) 142 and the respective plate 144 to continuously bias the respective probe 94 to the initial position.

Operation of the self-alignment compliance assembly 122 will be made with reference to FIGS. 15A-15B. Referring to FIG. 15A, the respective probe feed actuator 96 is activated via the controller 36 to move the respective probe feed bracket 98 and correspondingly move the respective probe 94 toward the workpiece 12. As FIG. 15A illustrates, the respective probe 94 is moving toward the workpiece 12 in the direction of arrow A, and the tip 120 of the respective probe 94 is slightly misaligned relative to the respective hole 52.

Next as shown in FIG. 15B, when the tip 120 of the respective probe 94 engages the respective holes 52, and due to the misalignment, causes the respective probe 94 to tilt within the cavity 126 of the respective housing 124, due to the compliance provided via the self-alignment compliance assembly 122. Briefly turning to FIG. 14B, this illustrates that the tilting of the respective probe 94 also causes the respective probe cap 102 to correspondingly tilt. Continuing with FIG. 15B, the respective housing 124 and the corresponding probe 94 concurrently move, i.e., move together, toward the workpiece 12. Depending on the misalignment, one or more of the respective first biasing member 130 and/or the respective second biasing members 140 may compress while the respective probe 94 is being inserted into the respective holes 52 to assist in aligning the respective probe 94 to minimize or avoid excessive external forces being applied to the respective probe 94 due to the misalignment. In certain configurations, the respective first biasing member 130 assists in aligning the respective probe 94, and the second biasing members 140 assist in aligning the respective housing 124 relative to the work surface 14.

Once the respective probe 94 is fully seated in the respective holes 52, the respective probe 94 self-aligns in the respective holes 52 such that the respective probe 94 is concentric with the respective hole 52. Generally, once the respective probe 94 is fully seated in the respective holes 52, then various measurements as discussed above may be conducted. It is to be appreciated that, optionally, other measurements may be made while the respective probe 94 enters the respective holes 52. When the respective probe 94 is fully seated on the workpiece 12, a face 146 of the respective housing 124 engages the work surface 14 of the workpiece 12.

The respective housing 124 continues to move toward the workpiece 12 until a desired engagement force is reached, and if the face 146 of the respective housing 124 is not normal to the work surface 14, the respective second biasing members 140 allow the respective housing 124 to tilt so that the face 146 of the respective housing 124 is positioned normal to the work surface 14. In other words, the respective second biasing members 140 allow the respective housing 124 to self-align relative to the work surface 14.

Turning to yet another configuration of the process tools 24A, 24B, 24C, 24D, each of the process tools 24C may be an applicator configured to apply a material, a compound, a substance, etc., to the work surface 14.

Each of the process tools 24A, 24B, 24C, 24D, such as third process tools 24C, may include the applicator configured to apply the compound, etc., to the work surface 14 such that the processed area 38, such as the first processed area 38, the second processed area 38, or a third processed area 38, forms a pattern of the compounds at the predetermined location.

For illustrative purposes, the applicator is referred to as the third process tools 24C, but it is to be appreciated that the applicator may be referred to as the first process tools 24A or the second process tools 24B in certain situations where the drill assembly 56 (referred to above as the first process tools 24A) is not being implemented and/or where the measuring device 90 (referred to above as the second process tools 24B) is not being implemented.

The applicator may be attached to the fixture 22 similarly as discussed above for the other process tools 24A, 24B, 24C, 24D. For example, the applicator may include a support bracket 82A, 82B attached to, or fixed to, the fixture 22 and/or the fixture platform 26 to support the applicator.

The applicator may include a nozzle, a movable arm, a brush, a sprayer, etc., or any other suitable feature to allow application of the material, the compound, the substance, etc., to the work surface 14. In addition, the controller 36 may be in communication with the applicator of each of the process tools 24C to control operation of the respective applicator. For example, the applicator may include an applicator actuator to cause the material, the compound, the substance, etc., to expel out of the nozzle (if using the nozzle), or cause movement of the movable arm, etc., to apply the material, the compound, the substance to the work surface 14.

In certain configurations, the applicator process may occur before any of the other processes discussed herein. In other configurations, the applicator process may occur between any of the other processes discussed herein. In yet other configurations, the applicator process may occur after all of the processes discussed herein.

Turning to another configuration of the process tools 24A, 24B, 24C, 24D, the process tools 24D may be an assembler configured to at least partially attach components 12 together. That is, the assembler may insert, attach, and/or apply one part of an assembler feature to one component 12, which is implemented to attach to another component 12, or, two or more components 12 may align and the assembler feature is inserted, attached, and/or applied together to these components 12. Non-limiting examples of the assembly processes may include mechanical attachments such as fasteners, clips, snaps, rivets, etc.; welding attachments; adhesive attachments; etc.

Each of the process tools 24A, 24B, 24C, 24D, such as fourth process tools 24D, may include the assembler configured to at least partially attach components 12 together such that the processed area 38 forms a pattern of the assembled features at the predetermined location. In certain configurations, each of the process tools 24D may include the assembler configured to insert the fastener into the respective hole 52 of the work surface 14 such that the processed area 38, such as the first processed area 38, the second processed area 38, the third processed area 38 or a fourth processed area 38, forms the pattern of fasteners in the respective holes 52 at the predetermined location. Continuing with the fastener example, the fasteners may be assembled one at a time, in a pattern or sequence, and/or all assembled simultaneously.

For illustrative purposes, the assembler is referred to as the fourth process tools 24D, but it is to be appreciated that the assembler may be referred to as the first process tools 24A, the second process tools 24B, or the third process tools 24C, in certain situations where the drill assembly 56 (referred to above as the first process tools 24A) is not being implemented and/or where the measuring device 90 (referred to above as the second process tools 24B) is not being implemented and/or where the applicator (referred to above as the third process tools 24C) is not being implemented.

The assembler may be attached to the fixture 22 similarly as discussed above for the other process tools 24A, 24B, 24C, 24D. For example, the assembler may include a support bracket 82A, 82B attached to, or fixed to, the fixture 22 and/or the fixture platform 26 to support the assembler.

The assembler may include a container loaded with fasteners, a drum loaded with fasteners, a movable arm, a fastener management system that sends fasteners from a repository to the end-effector tool 16A, 16B, 16C, etc., or any other suitable feature to perform the attachment process relative to the work surface 14. In addition, the controller 36 may be in communication with the assembler of each of the process tools 24D to control operation of the respective assembler.

In certain configurations, the assembler process may occur before any of the other processes discussed herein. In other configurations, the assembler process may occur between any of the other processes discussed herein. In yet other configurations, the assembler process may occur after all of the processes discussed herein.

The present disclosure also provides a method of manufacturing the component 12 of, for example, the aircraft. As shown in FIG. 1, the workpiece 12 is provided. As discussed above, the workpiece 12 may be any suitable configuration, and FIG. 1 is for illustrative purposes. Also, FIG. 1 may be representative of any of the process tools 24A, 24B, 24C, 24D attached to the end-effector tool 16A, 16B, 16C. Therefore, depending on the desired component 12 and/or the desired manufacturing process, the corresponding end-effector tool 16A, 16B, 16C is selected. Again, as mentioned above, the workpiece 12 has the work surface 14 to be worked on.

The end-effector tool 16A, 16B, 16C is selected to perform the task to the work surface 14. Then the machine 18 is attached to the selected end-effector tool 16A, 16B, 16C to control the end-effector tool 16A, 16B, 16C.

The end-effector tool 16A, 16B, 16C is selected based on the desired process or task to be performed to the work surface 14. As discussed above, many different examples of the process tools 24A, 24B, 24C, 24D are discussed above, and one type of the process tools 24A, 24B, 24C, 24D may be attached to separate ones of the end-effector tool 16A, 16B, 16C or a combination of two or more types of the process tools 24A, 24B, 24C, 24D may be attached to separate ones of the end-effector tool 16A, 16B, 16C.

Therefore, in certain configurations, the end-effector tool 16A, 16B, 16C may be further defined as the first end-effector tool 16A having the first process tools 24A configured to perform the first process to the work surface 14, and the first end-effector tool 16A may be selected to perform the desired manufacturing process. Additionally, in certain configurations, the second end-effector tool 16B having the set of second process tools 24B is configured to perform the second process to the work surface 14, and the second end-effector tool 16B may be selected to perform the desired manufacturing process, and so on depending on the number of different process tools 24A, 24B, 24C, 24D/possible manufacturing processes. Once the selected end-effector tool 16A, 16B, 16C has completed the task or tasks, the first end-effector tool 16A and the second end-effector tool 16B may be interchanged to perform the next selected task or tasks to the work surface 14, and so on depending on the number of different process tools 24A, 24B, 24C, 24D/possible manufacturing processes.

As discussed above, the set of the first process tools 24A, 24B, 24C, 24D are attached to the fixture 22 in the predetermined pattern, and the first process tools 24A, 24B, 24C, 24D are configured to perform the task, such as the first process, to the work surface 14. Similarly, the set of the second process tools 24A, 24B, 24C, 24D may be attached to the same fixture 22 as the first process tools 24A, 24B, 24C, 24D or the second process tools 24A, 24B, 24C, 24D may be attached to a different fixture 22 in the predetermined pattern. Generally, as discussed above, the second process tools 24A, 24B, 24C, 24D are configured to perform another task, such as the second process, to the work surface 14 different from the first process tools 24A, 24B, 24C, 24D. When the end-effector tool 16C includes both sets of the first process tools 24A, 24B, 24C, 24D and the second process tools 24A, 24B, 24C, 24D, the second process tools 24A, 24B, 24C, 24D may be attached to the fixture 22 proximal to the set of the first process tools 24A, 24B, 24C, 24D. Operation of the second process tools 24A, 24B, 24C, 24D may be activated, via the controller 36, after activating operation of the first process tools 24A, 24B, 24C, 24D. In other operations, the controller 36 may control both of the first process tools 24A, 24B, 24C, 24D and the second process tools 24A, 24B, 24C, 24D at the same time to perform both tasks at the same time.

Once the desired end-effector tool 16A, 16B, 16C is selected, here the drilling process, the end-effector tool 16A, 16B, 16C is attached to the workpiece 12, via the holders 42. First, the controller 36 uses data from the positioning sensors 30 to locate the end-effector tool 16A, 16B, 16C in the desired position, orientation, i.e., desired location, relative to the work surface 14. Then, the controller 36 activates the vacuum assembly 46 such that the holders 42 secure the selected end-effector tool 16A, 16B, 16C to the predetermined location of the workpiece 12 so that the task may be performed. For example, the vacuum assembly 46 is activated, via the controller 36, to create suction between the holders 42 and the workpiece 12 to vacuum attach the end-effector tool 16A, 16B, 16C to the workpiece 12 at the predetermined location. Generally, the vacuum assembly 46 is activated before activating operation of the first process tools 24A, 24B, 24C, 24D.

In addition, the controller 36 is configured to control the end-effector tool 16A, 16B, 16C, including controlling the process tools 24A, 24B, 24C, 24D. For example, movement of the end-effector tool 16A, 16B, 16C is controlled, via the controller 36, to position the first process tools 24A, 24B, 24C, 24D relative to the work surface 14 such that the predetermined pattern is aligned at the predetermined location relative to the work surface 14. In addition, operation of the first process tools 24A, 24B, 24C, 24D is controlled, via the controller 36, such that the first process tools 24A, 24B, 24C, 24D perform the task to the work surface 14 to form the first processed area 38 at the predetermined location of the work surface 14. Generally, operation of the process tools 24A, 24B, 24C, 24D occurs after aligning and securing the end-effector tool 16A, 16B, 16C relative to the work surface 14.

The controller 36 may control the process tools 24A, 24B, 24C, 24D as desired. In certain configurations, controlling operation of the first process tools 24A (or any of the other process tools 24A, 24B, 24C, 24D, i.e., the second process tools 24B, the third process tools 24C, the fourth process tools 24D, etc.) occurs simultaneously. In other words, all of the first process tools 24A, 24B, 24C, 24D may be operated at the same time. Optionally, the controlling operation of the first process tools 24A (or any of the other process tools 24B, 24C, 24D, i.e., the second process tools 24B, the third process tools 24C, the fourth process tools 24D, etc.) may occur one at a time, in a sequence or pattern, etc. The controller 36 may be programmed with the program/the data, etc., to control and operate the end-effector tool(s) 16A, 16B, 16C and corresponding process tools 24A, 24B, 24C, 24D.

One example of selecting certain process tools 24A, 24B, 24C, 24D is discussed below, and it is to be appreciated that many other processes or combinations are possible as discussed above. As discussed above, in certain configurations, the first process tools 24A may include the drill assembly 56 configured to form the hole 52 in the work surface 14 such that the first processed area 38 forms the pattern of holes 52 at the predetermined location. Specific details of the drill assembly 56 are discussed above, so see above for additional details.

Once the fixture 22 is attached to the workpiece 12 via the holders 42, the drilling process may proceed. The clamp actuator 74 of each of the process tools 24A may be activated via the controller 36 to move the clamp 72 into engagement with the workpiece 12 such that the clamp 72 of each of the process tools 24A apply a predetermined force or a predetermined pressure to the workpiece 12 to achieve the locked position. Once the clamp 72 of the process tools 24A is in the locked position, the drill assembly 56, and more specifically the drill 58, of each of the first process tools 24A may be activated (as desired), via the controller 36, to form the respective hole 52 in the work surface 14. Once the drilling process is completed, the drill 58 of each of the process tools 24A may be deactivated (as desired), via the controller 36. If the end-effector tool 16A, 16B, 16C only includes the drill assemblies 56, then the controller 36 may deactivate the vacuum assembly 46 to remove suction so that the holders 42 release the end-effector tool 16A, 16B, 16C from the workpiece 12. Also, if the end-effector tool 16A, 16B, 16C only includes the drill assemblies 56, the machine 18 may repeat the process for another location of the workpiece 12 or start this process over for another workpiece 12.

If it is desirable to perform another process at the location that was drilled, the machine 18 may detach the first end-effector tool 16A (which has the drill assemblies 56 ), and attach the second end-effector tool 16B (which has other process tools 24A, 24C, 24D, such as the second process tools 24B); or, the end-effector tool 16C may be equipped with both the drill assemblies 56 and the other process tools 24A, 24B, 24C, 24D, such as the second process tools 24B.

As discussed above, in certain configurations, each of the second process tools 24B may include the probe assembly 92 configured to measure characteristics of the workpiece 12. For example, the probe assemblies 92 may measure characteristics of the drilled holes 52 of the workpiece 12. As such, the probe assemblies 92 are generally activated after the drilling process. Specific details of the probe assembly 92 are discussed above, so see above for additional details.

Once the desired end-effector tool 16A, 16B, 16C is selected, here the measuring process, the end-effector tool 16A, 16B, 16C is attached to the workpiece 12, via the holders 42. First, the controller 36 uses data from the positioning sensors 30 to locate the end-effector tool 16A, 16B, 16C in the desired position, orientation, i.e., desired location, relative to the work surface 14. Then, the controller 36 activates the vacuum assembly 46 such that the holders 42 secure the selected end-effector tool 16A, 16B, 16C to the predetermined location of the workpiece 12 so that the task may be performed. For example, the vacuum assembly 46 is activated, via the controller 36, to create suction between the holders 42 and the workpiece 12 to vacuum attach the end-effector tool 16A, 16B, 16C to the workpiece 12 at the predetermined location. Generally, the vacuum assembly 46 is activated before activating operation of the second process tools 24B.

In addition, the controller 36 is configured to control the end-effector tool 16A, 16B, 16C, including controlling the process tools 24A, 24B, 24C, 24D. For example, movement of the end-effector tool 16A, 16B, 16C is controlled, via the controller 36, to position the second process tools 24A, 24B, 24C, 24D relative to the work surface 14 such that the predetermined pattern is aligned at the predetermined location relative to the work surface 14. In addition, operation of the second process tools 24B is controlled, via the controller 36, such that the second process tools 24B perform the task (second task) to the work surface 14 to further form the first processed area 38 or form a second processed area 38 at the predetermined location of the work surface 14. Generally, operation of the process tools 24A, 24B, 24C, 24D occurs after aligning and securing the end-effector tool 16A, 16B, 16C relative to the work surface 14.

The controller 36 may control the process tools 24A, 24B, 24C, 24D as desired. In certain configurations, controlling operation of the second process tools 24B (or any of the other process tools 24A, 24C, 24D, i.e., the first process tools 24A, the third process tools 24C, the fourth process tools 24D, etc.) occurs simultaneously. In other words, all of the second process tools 24B may be operated at the same time. Optionally, the controlling operation of the second process tools 24B (or any of the other process tools 24A, 24C, 24D, i.e., the first process tools 24A, the third process tools 24C, the fourth process tools 24D, etc.) may occur one at a time, in a sequence or pattern, etc. The controller 36 may be programmed with the program/the data, etc., to control and operate the end-effector tool(s) 16A, 16B, 16C and corresponding process tools 24A, 24B, 24C, 24D.

One example of selecting certain process tools 24A, 24B, 24C, 24D is discussed below, and it is to be appreciated that many other processes or combinations are possible as discussed above. As discussed above, in certain configurations, the second process tools 24B may include the measuring device 90 configured to measure characteristics of the workpiece 12 at the predetermined location. Specific details of the measuring device 90 are discussed above, so see above for additional details.

Once the fixture 22 is attached to the workpiece 12 via the holders 42, the measuring process may proceed. The probe assembly 92 of each of the second process tools 24B may be activated to measure the characteristics of the workpiece 12. For example, the probe 94 of the probe assembly 92 may be moved into the respective hole 52 of the work surface 14 to measure characteristics of the respective hole 52. More specifically, the probe feed actuator 96 of each of the process tools 24B may be activated via the controller 36 to move the probe feed bracket 98, and thus, move the probe 94 into the holes 52 and move the housing 124 toward the workpiece 12. Once the face 146 of the housing 124 engages the work surface 14 with a predetermined force or predetermined pressure, and the probe 94 is fully seated in the respective holes 52, the measurement process may occur, and the controller 36 may collect and analyze data from the probe 94. The probe 94 may move while the data is being collected. That is, the controller 36 may continue to collect data as the probe 94 moves relative to the hole 52. Once the measuring process is completed, the probe 94 of each of the process tools 24B, as well as the housing 124, may be retraced via the controller 36. If the end-effector tool 16A, 16B, 16C only includes the probe assemblies 92, then the controller 36 may deactivate the vacuum assembly 46 to remove suction so that the holders 42 release the end-effector tool 16A, 16B, 16C from the workpiece 12. Also, if the end-effector tool 16A, 16B, 16C only includes the probe assemblies 92, the machine 18 may repeat the process for another location of the workpiece 12 or start this process over for another workpiece 12.

If it is desirable to perform another process at the location that was drilled and measured, the machine 18 may detach the end-effector tool 16A, 16B, 16C (which has the drill assemblies 56 and the probe assemblies 92, or only has the probe assemblies 92 ), and attach the third end-effector tool 16A, 16B, 16C (which has other process tools 24A, 24B, 24C, 24D, such as the third process tools 24C or the fourth process tools 24D); or, the end-effector tool 16A, 16B, 16C may be equipped with the drill assemblies 56, the probe assemblies 92, and the other process tools 24A, 24B, 24C, 24D, such as the third process tools 24C, the fourth process tools 24D, etc.

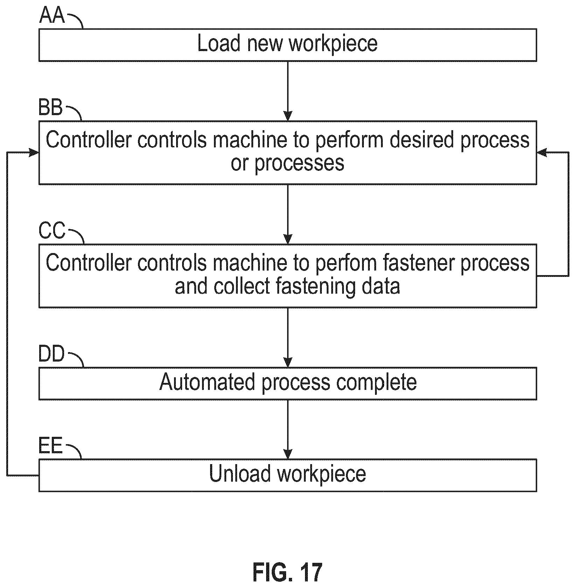

With regards to FIG. 17, another general example of the method of manufacturing the component 12 as described above may be found. First, at block AA, the workpiece 12 is loaded into a work area. Then, at block BB, the controller 36 controls the machine 18 to select the desired end-effector tool 16A, 16B, 16C to perform the desired process or processes, and then controls the process tools 24A, 24B, 24C, 24D for the selected desired process or processes. At block CC, once those processes are completed, then the controller 36 may control the machine 18 to perform the assembly process to the workpiece 12 and collect fastening data about workpiece 12. The fastening data may be collected during fastener insertion and fastening, and may include data such as, but not limited to, insertion force, insertion depth, fastening torque, fastener diameter, fastener identification, fastener length, etc. Then, once the assembly process and filling data process is complete, per block DD, the automated process is complete, and the machine 18 may repeat this process for another workpiece 12. Thus, at block EE, the workpiece 12 may be unloaded from the work area.

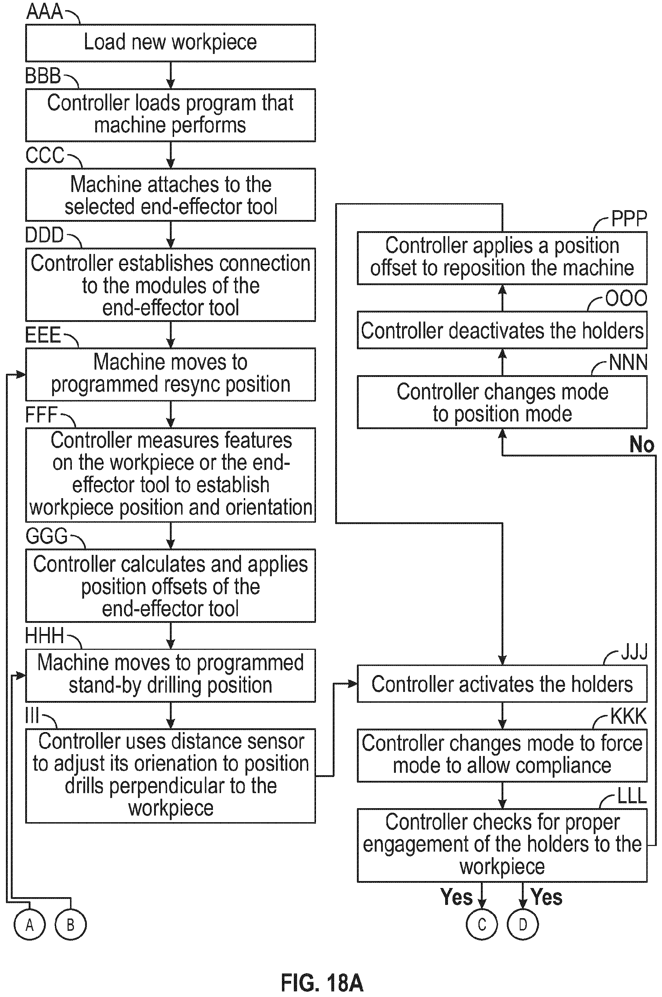

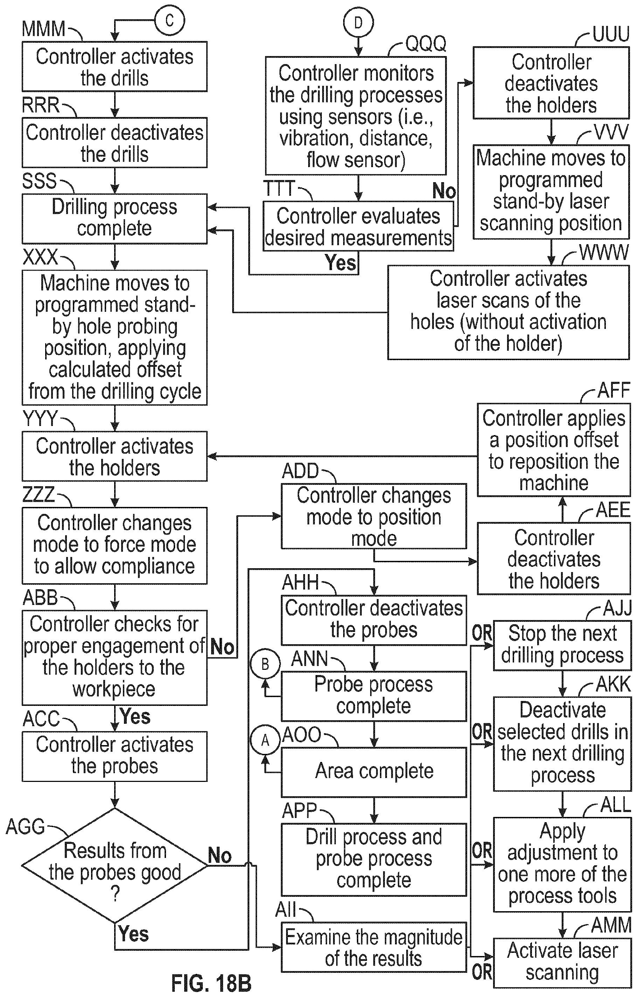

With regards to FIGS. 18A and 18B, a more specific example of the method of manufacturing the component 12 as described above may be found. First, at block AAA, the workpiece 12 is loaded into a work area. At block BBB, the controller 36 loads the program corresponding to the manufacturing process(es) to be performed via the machine 18. At block CCC, the controller 36 controls the machine 18 to select/attach the desired end-effector tool 16A, 16B, 16C to the machine 18. At block DDD, the controller 36 is connected to the various programs and/or modules associated with the structures to be controlled for the selected process tools 24A, 24B, 24C, 24D. At block EEE, the controller 36 instructs the machine 18 to move to a starting position, i.e., resync position. The starting position or the resync position is the location that the machine 18 moves to while gathering positional information about the workpiece 12. That is, the starting position or the resync position are the reference gathering positions for the automated equipment such as the machine 18. At block FFF, the controller 36 measures or identifies one or more features on the workpiece 12 or the end-effector tool 16A, 16B, 16C, via the positioning sensors 30, to establish a position and orientation of the workpiece 12. At block GGG, the controller 36 calculates and applies a position offset and/or an orientation (i.e., angular) offset of the end-effector tool 16A, 16B, 16C to instruct the machine 18 to position the end-effector tool 16A, 16B, 16C in the desired location relative to the work surface 14. At block HHH, the controller 36 instructs the machine 18 to move to a stand-by position to await the first process. At block III, the controller 36 instructs the machine 18 to adjust or correct the orientation of the process tools 24A, 24B, 24C, 24D to ensure that the process tools 24A, 24B, 24C, 24D are transverse or perpendicular to the workpiece 12 or work surface 14. The controller 36 uses data from the positioning sensors 30, such as distance sensors, etc., to locate the end-effector tool 16A, 16B, 16C in the desired position, orientation, i.e., desired location, relative to the work surface 14.

At block JJJ, once the end-effector tool 16A, 16B, 16C is aligned in the desired location relative to the workpiece 12, the controller 36 activates the vacuum assembly 46 such that the holders 42 secure the selected end-effector tool 16A, 16B, 16C to the predetermined location of the workpiece 12 so that the task may be performed. At block KKK, the controller 36 changes mode to a force mode to allow compliance. In the force mode, the machine 18 may move in a programmed direction(s) until a predetermined force is applied to a chosen structure, which indicates that the desired compliance is met, and thus, then stops movement. For example, when in the force mode, the machine 18 may move the end-effector tool 16A, 16B, 16C into the workpiece 12 until a predetermined force is applied to the workpiece 12 via the end-effector tool 16A, 16B, 16C, which indicates that the desired compliance between the workpiece 12 and the end-effector tool 16A, 16B, 16C is met, and thus, then stops movement of the end-effector tool 16A, 16B, 16C. Then, at block LLL, the controller 36 determines whether the holders 42 are providing the desired holding force to the workpiece 12. If yes, the method proceeds to block MMM. If no, the method process to block NNN.

When the answer is no at block LLL, the method proceeds to block NNN, in which the controller 36 changes mode to a position mode to allow the machine 18 to reposition the end-effector tool 16A, 16B, 16C. Then, at block OOO, the controller 36 deactivates the vacuum assembly 46 to allow the holders 42 to release from the workpiece 12. At block PPP, the controller 36 calculates and applies a position offset of the end-effector tool 16A, 16B, 16C to instruct the machine 18 to reposition the end-effector tool 16A, 16B, 16C to obtain the desired location relative to the work surface 14. Then blocks JJJ, KKK, and LLL are repeated until the decision at block LLL results in yes.

When the answer is yes at block LLL, the method proceeds to block MMM as well as block QQQ. At block MMM, the controller 36 activates the process tools 24A, 24B, 24C, 24D, and for illustrative purposes for this example, activates the drills 58. At block QQQ, the controller 36 monitors the drilling process using the sensors 62, such as vibration sensors, distance sensors, and/or flow sensors.

At block RRR, the controller 36 deactivates the process tools 24A, 24B, 24C, 24D, and for this example, deactivates the drills 58. At block SSS, the drilling process is complete.

Turning back to block QQQ, after this block, the controller 36 evaluates the desired measurements of the holes 52 at block TTT, and a decision is made as to whether the measurements are acceptable. The controller 36 may evaluate each of the holes 52 individually or may evaluate multiple holes 52 at the same time or simultaneously. If yes, the method proceeds to block SSS in which the drill 58 process is complete. If no, the method process to block UUU in which the controller 36 deactivates the vacuum assembly 46 to allow the holders 42 to release from the workpiece 12. Then, at block VVV, the controller 36 instructs the machine 18 to move to a stand-by position to allow for laser scanning of the workpiece 12. Optionally, a separate machine may be implemented to perform the laser scanning. Alternatively, the end-effector tool 16A, 16B, 16C may include one or more lasers to perform the laser scanning of the workpiece 12, such as laser scanning each of the holes 52. Next, at block WWW, the controller 36 activates one or more laser scanners, and more specifically activates one or more lasers of the laser scanners, to perform laser scans of the holes 52 drilled. The laser scanners may provide a 3-dimensional scan of the workpiece 12, and more specifically, the respective holes 52, to collect data about the holes 52 including angularity and/or countersink 54 depth of the holes 52 which may be implemented to determine quality of the holes 52.

Continuing with block WWW, the holders 42 are not secured to the workpiece 12, and thus, the end-effector tool 16A, 16B, 16C is not secured to the workpiece 12 when the laser scans are performed. Next, the method returns to block SSS in which the drill 58 process is complete.

Once the first process is complete, and in this example, once the drilling process is complete, the method may proceed to block XXX. At block XXX, the controller 36 instructs the machine 18 to move to a stand-by position to await the second process, and for illustrative purposes, the second process is the measuring process. Also at block XXX, the controller 36 calculates and applies a position offset of the end-effector tool 16A, 16B, 16C from the drilling process to instruct the machine 18 to position the end-effector tool 16A, 16B, 16C in the desired location relative to the work surface 14. At block YYY, once the end-effector tool 16A, 16B, 16C is aligned in the desired location relative to the workpiece 12, the controller 36 activates the vacuum assembly 46 such that the holders 42 secure the selected end-effector tool 16A, 16B, 16C to the predetermined location of the workpiece 12 so that the next task may be performed.

At block ZZZ, the controller 36 change mode to the force mode to allow compliance. As discussed above, in the force mode, the machine 18 may move in the programmed direction(s) until the predetermined force is applied to the chosen structure, which indicates that the desired compliance is met, and thus, then stops movement (see above for further discussion). Then, at block ABB, the controller 36 determines whether the holders 42 are providing the desired holding force to the workpiece 12. If yes, the method proceeds to block ACC. If no, the method process to block ADD.

When the answer is no at block ABB, the method proceeds to block ADD, in which the controller 36 changes mode to a position mode to allow the machine 18 to reposition the end-effector tool 16A, 16B, 16C. Then, at block AEE, the controller 36 deactivates the vacuum assembly 46 to allow the holders 42 to release from the workpiece 12. At block AFF, the controller 36 calculates and applies a position offset of the end-effector tool 16A, 16B, 16C to instruct the machine 18 to reposition the end-effector tool 16A, 16B, 16C to obtain the desired location relative to the work surface 14. Then blocks YYY, ZZZ, and ABB are repeated until the decision at block ABB results in yes.

When the answer is yes at block ABB, the method proceeds to block ACC, in which the controller 36 activates the process tools 24A, 24B, 24C, 24D, and for illustrative purposes for this example, activates the measuring devices 90, such as the probes 94. At block AGG, the controller 36 determines whether the data, and thus the results, from the measuring devices 90, such as the probes 94, are acceptable. That is, at block AGG, the controller 36 may determine whether the depth of the holes 52 and/or the countersinks 54 of the holes 52 are acceptable, whether the diameter of the holes 52 and/or the countersinks 54 of the holes 52 are acceptable, or any other quality criteria of the workpiece 12. If yes, the method proceeds to block AHH. If no, the method process to block AII.

When the answer is no at block AGG, the method proceeds to block AII, in which the controller 36 examines or analyzes the magnitude of the data, and thus the results, collected from the measuring devices 90. Then, continuing with the method in light of the answer at block AGG being no, the controller 36 selects one of blocks AJJ, AKK, ALL, or AMM to be performed. If block AJJ is selected, the next process is stopped, and for illustrative purposes for this example, the controller 36 instructs the machine 18 to stop the next drilling process. If block AKK is selected, the controller 36 instructs the machine 18 to deactivate certain process tools 24A, 24B, 24C, 24D, and in this example, deactivate certain drills 58, in the next drilling process. If block ALL is selected, the controller 36 instructs or applies one or more adjustments to one or more of the process tools 24A, 24B, 24C, 24D, and in this example, the drills 58, in the next drilling process. If block AMM is selected, the controller 36 instructs the machine 18 to move to a stand-by position to allow for laser scanning of the workpiece 12. Continuing with block AMM, the controller 36 activates one or more lasers to perform laser scans of the holes 52 drilled. Continuing with block AMM, the holders 42 are not secured to the workpiece 12, and thus, the end-effector tool 16A, 16B, 16C is not secured to the workpiece 12 when the laser scans are performed.

When the answer is yes at block AGG, the method proceeds to block AHH, in which the controller 36 instructs the machine 18 to deactivate the process tools 24A, 24B, 24C, 24D, and in this example, deactivate the probes 94. Next, at block ANN, the second process is complete, and in this example, the measuring process is complete. Then, the method may return to block HHH to repeat blocks HHH through ANN if additional processes are desired. Therefore, at block ANN, a decision is made, which is either to return to block HHH or proceed to block AOO. For example, if the controller 36 determines that new positioning of the end-effector tool 16A, 16B, 16C and/or the machine 18 is desired, then the method will return to block HHH. If additional processes are not desired at block ANN, then the method will proceed to block AOO.

After block ANN, the method may proceed to block AOO, in which the controller 36 determines that the area is complete. Then, the method may return to block EEE to repeat blocks EEE though AOO if additional processes are desired. Therefore, at block AOO, a decision is made, which is either to return to block EEE or proceed to block APP. For example, if the controller 36 determines that new positioning of the end-effector tool 16A, 16B, 16C and/or the machine 18 is desired, then the method will return to block EEE. If additional processes are not desired at block AOO, then the method will proceed to block APP.

After block AOO, the method may proceed to block APP, in which the controller 36 determines that the first process and the second process are complete, and in this example, the controller 36 determines that the drilling process and the measuring process are complete.

It is to be appreciated that the order or sequence of performing the methods as discussed above is for illustrative purposes and other orders or sequences are within the scope of the present teachings. It is to also be appreciated that the methods may include other features not specifically discussed immediately above.

While the best modes and other configurations for carrying out the disclosure have been described in detail, those familiar with the art to which this disclosure relates will recognize various alternative designs and configurations for practicing the disclosure within the scope of the appended claims. Furthermore, the configurations shown in the drawings or the characteristics of various configurations mentioned in the present description are not necessarily to be understood as configurations independent of each other. Rather, it is possible that each of the characteristics described in one of the examples of a configuration can be combined with one or a plurality of other desired characteristics from other configurations, resulting in other configurations not described in words or by reference to the drawings. Accordingly, such other configurations fall within the framework of the scope of the appended claims.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The illustrations of the configurations described herein are intended to provide a general understanding of the structure of the various configurations. The illustrations are not intended to serve as a complete description of all of the elements and features of apparatus and systems that utilize the structures or methods described herein. Many other configurations may be apparent to those of skill in the art upon reviewing the disclosure. Other configurations may be utilized and derived from the disclosure, such that structural and logical substitutions and changes may be made without departing from the scope of the disclosure. Accordingly, the disclosure and the figures are to be regarded as illustrative rather than restrictive.

The following Clauses provide some example configurations of the processing system 10, the probe assembly 92, and the method as disclosed herein.

Clause 1: A processing system for manufacturing a component, the processing system comprising: a workpiece having a work surface; an end-effector tool including: a fixture; and a set of first process tools attached to the fixture in a predetermined pattern, and the first process tools are configured to perform a task to the work surface; a controller in communication with the end-effector tool, the controller including a processor configured to execute instructions from a memory to thereby cause the controller to: control movement of the end-effector tool to position the first process tools relative to the work surface such that the predetermined pattern is aligned at a predetermined location relative to the work surface; and control operation of the first process tools such that the first process tools perform the task to the work surface to form a first processed area at the predetermined location of the work surface.

Clause 2: The processing system as set forth in clause 1 wherein: the work surface presents a first configuration; the fixture includes a fixture platform having an outer surface presenting a second configuration complementary to first configuration; and a portion of each of the first process tools is movable through the fixture platform when the task is performed to the work surface.

Clause 3: The processing system as set forth in any one of the preceding clauses wherein the controller is configured to control operation of each of the first process tools simultaneously.

Clause 4: The processing system as set forth in any one of the preceding clauses wherein: the work surface of the workpiece and the outer surface of the fixture face each other when the end-effector tool is disposed adjacent to the workpiece; the workpiece is a panel of an aircraft and the first configuration of the work surface is arcuate in a convex orientation and/or a concave orientation; and the second configuration of the outer surface of the fixture platform is arcuate in a convex orientation and/or a concave orientation opposite of the work surface such that the work surface and the fixture platform are complementary.

Clause 5: The processing system as set forth in any one of the preceding clauses wherein the end-effector tool includes a coupler attached to the fixture.

Clause 6: The processing system as set forth in any one of the preceding clauses: wherein the end-effector tool is further defined as a first end-effector tool having the first process tools; further including a second end-effector tool having a set of second process tools; wherein the first process tools are configured to perform a first process to the work surface and the second process tools are configured to perform a second process to the work surface; and wherein the first end-effector tool and the second end-effector tool are interchangeable with each other to perform separate tasks to the work surface.

Clause 7: The processing system as set forth in clause 6 wherein each of the first process tools includes a drill assembly configured to form a hole in the work surface such that the first processed area forms a pattern of holes at the predetermined location.

Clause 8: The processing system as set forth in clause 7 wherein the drill assembly of each of the first process tools is configured to form a countersink aligned with the respective hole of the work surface.

Clause 9: The processing system as set forth in clause 6 wherein each of the first process tools includes an applicator configured to apply a compound to the work surface such that the first processed area forms a pattern of the compounds at the predetermined location.

Clause 10: The processing system as set forth in clause 7 or 8 wherein each of the second process tools includes an assembler configured to insert a fastener into the respective hole of the work surface such that the first processed area forms a pattern of fasteners in the respective holes at the predetermined location.

Clause 11: The processing system as set forth in clause 6 wherein each of the second process tools include a measuring device configured to measure characteristics of the workpiece.

Clause 12: The processing system as set forth in clause 11 wherein the measuring device of each of the second process tools include a probe assembly configured to measure characteristics of the workpiece.

Clause 13: The processing system as set forth in clause 12 wherein the probe assembly of each of the second process tools includes a probe insertable into the respective hole of the work surface to measure characteristics of the respective hole.

Clause 14: The processing system as set forth in any one of clauses 1-5 wherein: the end-effector tool includes a set of second process tools attached to the fixture proximal to the set of the first process tools; and the first process tools are configured to perform a first process to the work surface and the second process tools are configured to perform a second process to the work surface.

Clause 15: The processing system as set forth in clause 14 wherein: each of the first process tools includes a drill assembly configured to form a hole in the work surface; and each of the second process tools includes a measuring device configured to measure characteristics of the workpiece.

Clause 16: The processing system as set forth in any one of the preceding clauses wherein the end-effector tool includes an end-effector attachment assembly configured to engage the workpiece to secure the end-effector tool at the predetermined location.

Clause 17: The processing system as set forth in clause 16 wherein: the end-effector attachment assembly includes a plurality of holders attached to the fixture and a vacuum assembly in fluid communication with the holders; and the controller is configured to activate the vacuum assembly when the holders engage the workpiece to create suction between the holders and the workpiece to vacuum attach the end-effector tool to the workpiece at the predetermined location.

Clause 18: The processing system as set forth in clause 17 wherein the holders are further defined as suction cups.

Clause 19: The processing system as set forth in any one of the preceding clauses wherein: the end-effector tool includes a plurality of positioning sensors coupled to the fixture; and the positioning sensors are configured to align the end-effector tool relative to the workpiece such that the first process tools align at the predetermined location.

Clause 20: The processing system as set forth in clause 19 wherein the positioning sensors include a camera assembly.

Clause 21: The processing system as set forth in clause 19 or 20 wherein: the workpiece includes at least one reference guide; and the positioning sensors are configured to identify the reference guide to position the end-effector tool relative to the work surface such that the first process tools align in the predetermined location.

Clause 22: The processing system as set forth in any one of the preceding clauses wherein each of the first process tools includes a drill assembly.

Clause 23: The processing system as set forth in clause 22 wherein the drill assembly of each of the first process tools includes: a drill having a processing bit; a drill feed actuator coupled to the drill and configured to move the processing bit along a longitudinal axis between a retracted position and an extended position; and a drill actuator coupled to the processing bit and configured to selectively operate the processing bit.

Clause 24: The processing system as set forth in clause 23 wherein the controller is configured to control operation of the drill of each of the first process tools such that the processing bit of the respective drill creates a respective hole in the work surface to form a pattern of holes at the predetermined location.

Clause 25: The processing system as set forth in any one of the preceding clauses wherein each of the first process tools includes a probe assembly.

Clause 26: The processing system as set forth in clause 25 wherein the probe assembly of each of the first process tools includes a probe configured to measure characteristics of the workpiece.

Clause 27: The processing system as set forth in clause 26 wherein the work surface of the workpiece defines a plurality of holes, and the respective probe is insertable into the respective holes of the work surface to measure characteristics of the respective holes.

Clause 28: The processing system as set forth in clause 27 wherein the probe assembly of each of the first process tools includes a first sensor coupled to the respective probe to measure a depth of the respective holes.

Clause 29: The processing system as set forth in clause 27 or 28 wherein: the probe assembly of each of the first process tools includes a probe cap attached to the respective probe such that the respective probe cap moves with the respective probe between a retracted position and an extended position; and wherein the first sensor of the probe assembly of each of the first process tools is configured to determine the depth of the respective holes based on the position of the respective probe cap.

Clause 30: The processing system as set forth in one of clauses 27-29 wherein: each of the holes includes a countersink portion and a second portion, with the countersink portion and the second portion of each of the holes being different outer diameters; and the probe assembly of each of the first process tools includes a second sensor coupled to the respective probe to measure a depth of the countersink portion of the respective holes.

Clause 31: The processing system as set forth in one of clauses 27-29 wherein the probe assembly of each of the first process tools includes a self-alignment compliance assembly coupled to the respective probe to allow compliance of the respective probe relative to the workpiece to accommodate one or more workpiece tolerances as the respective probe enters the respective holes.

Clause 32: The processing system as set forth in clause 31 wherein: the self-alignment compliance assembly of the probe assembly of each of the first process tools includes a housing defining a cavity along a longitudinal axis, and the respective probe is disposed through the respective cavity; and the self-alignment compliance assembly of the probe assembly of each of the first process tools includes a first biasing member disposed between a plurality of first reaction surfaces within the respective housing to allow tilting of the respective probe relative to the longitudinal axis such that the respective probe self-aligns to the workpiece as the respective probe is inserted into the respective holes.

Clause 33: The processing system as set forth in clause 32 wherein: the probe assembly of each of the first process tools includes a probe feed bracket coupled to the respective probe to move the respective probe between a retracted position and an extended position; the probe feed bracket of the probe assembly of each of the first process tools includes a plurality of second reaction surfaces spaced apart from each other; the housing of the probe assembly of each of the first process tools includes a flange presenting at least one of the second reaction surfaces; the self-alignment compliance assembly of the probe assembly of each of the first process tools includes a plurality second biasing members; and each of the second biasing members of the self-alignment compliance assembly of each of the first process tools are disposed between the respective flange and at least another one of the respective pair of the second reaction surfaces to provide compliance of the respective probe relative to the workpiece which assists in self-aligning the respective probe relative to the workpiece as the respective probe is inserted into the respective holes.

Clause 34: A probe assembly for measuring characteristics of a hole of a workpiece, the probe assembly comprising: a probe insertable into the hole of the workpiece to measure characteristics of the hole; and a self-alignment compliance assembly coupled to the probe to allow compliance of the probe relative to the workpiece to accommodate one or more workpiece tolerances as the probe is inserted into the hole.

Clause 35: The probe assembly as set forth in clause 34 wherein: the self-alignment compliance assembly includes a housing defining a cavity along a longitudinal axis, and the probe is disposed through the cavity; and the self-alignment compliance assembly includes a first biasing member disposed between a plurality of first reaction surfaces within the housing to allow tilting of the probe relative to the longitudinal axis such that the probe self-aligns to the workpiece as the probe is inserted into the hole.

Clause 36: The probe assembly as set forth in clause 34 or 35: further including a probe feed bracket coupled to the probe to move the probe relative to the workpiece; wherein the probe feed bracket includes a plurality of second reaction surfaces spaced apart from each other; wherein the housing includes a flange presenting at least one of the second reaction surfaces; and wherein the self-alignment compliance assembly includes a plurality second biasing members disposed between the flange and at least another one of the respective pair of the second reaction surfaces to provide compliance of the probe relative to the workpiece which assists in self-aligning the probe relative to the workpiece as the probe is inserted into the hole.

Clause 37: A method of manufacturing a component of an aircraft, the method comprising: providing a workpiece having a work surface; selecting an end-effector tool to perform a task to the work surface, wherein the end-effector tool includes: a fixture; and a set of first process tools attached to the fixture in a predetermined pattern, and the first process tools are configured to perform the task to the work surface; controlling movement of the end-effector tool, via a controller, to position the first process tools relative to the work surface such that the predetermined pattern is aligned at a predetermined location relative to the work surface; and controlling operation of the first process tools, via the controller, such that the first process tools perform the task to the work surface to form a first processed area at the predetermined location of the work surface.

Clause 38: The method as set forth in clause 37 wherein controlling operation of the first process tools occurs simultaneously.

Clause 39: The method as set forth in clause 37 or 38: wherein the end-effector tool is further defined as a first end-effector tool having the first process tools configured to perform a first process to the work surface; further including a second end-effector tool having a set of second process tools configured to perform a second process to the work surface; and wherein the method further comprises interchanging the first end-effector tool and the second end-effector tool to perform the selected task to the work surface.

Clause 40: The method as set forth in one of clauses 37-39: wherein each of the first process tools includes a drill assembly configured to form a hole in the work surface such that the first processed area forms a pattern of holes at the predetermined location; and wherein the method further comprises activating the drill assembly of each of the first process tools to form the respective hole in the work surface.

Clause 41: The method as set forth in one of clauses 37-40: wherein each of the second process tools includes a probe assembly configured to measure characteristics of the workpiece; and wherein the method further comprises activating the probe assembly of each of the second process tools to measure the characteristics of the workpiece.

Clause 42: The method as set forth in clause 41 further comprising moving a probe of the probe assembly into the respective hole of the work surface to measure characteristics of the respective hole.

Clause 43: The method as set forth in clause 37 or 38 wherein: the end-effector tool includes a set of second process tools attached to the fixture proximal to the set of the first process tools; the first process tools are configured to perform a first process to the work surface and the second process tools are configured to perform a second process to the work surface; and the method further comprises activating operation of the second process tools, via the controller, after activating operation of the first process tools.

Clause 44: The method as set forth in one of clauses 37-43 further comprising attaching the end-effector tool to the workpiece, via a plurality of holders.

Clause 45: The method as set forth in clause 44 further comprising activating a vacuum assembly, via the controller, to create suction between the holders and the workpiece to vacuum attach the end-effector tool to the workpiece at the predetermined location.

Clause 46: The method as set forth in clause 45 wherein activating the vacuum assembly occurs before activating operation of the first process tools.

## Claims

1. A processing system for manufacturing a component, the processing system comprising:
a workpiece (12) having a work surface (14);
an end-effector tool (16) including:
a fixture (22); and
a set of first process tools (24) attached to the fixture in a predetermined pattern, and the first process tools (24) are configured to perform a task to the work surface (14);
a controller (36) in communication with the end-effector tool (16), the controller (36) including a processor (P) configured to execute instructions from a memory (M) to thereby cause the controller to:
control movement of the end-effector tool (16) to position the first process tools (24) relative to the work surface (14) such that the predetermined pattern is aligned at a predetermined location relative to the work surface (14); and
control operation of the first process tools (24) such that the first process tools (24) perform the task to the work surface (14) to form a first processed area (38) at the predetermined location of the work surface (14).

2. The processing system as set forth in claim 1 wherein:
the work surface (14) presents a first configuration;
the fixture (22) includes a fixture platform (26) having an outer surface (28) presenting a second configuration complementary to first configuration; and
a portion of each of the first process tools (24) is movable through the fixture platform (26) when the task is performed to the work surface (14).

3. The processing system as set forth in claim 1 wherein:
the end-effector tool (16) includes a set of second process tools (24) attached to the fixture (22) proximal to the set of the first process tools (24); and
the first process tools (24) are configured to perform a first process to the work surface (14) and the second process tools (24) are configured to perform a second process to the work surface (14).

4. The processing system as set forth in claim 3 wherein:
each of the first process tools (24) includes a drill assembly (56) configured to form a hole (52) in the work surface (14); and
each of the second process tools (24) includes a measuring device (90) configured to measure characteristics of the workpiece (12).

5. The processing system as set forth in claim 1 wherein the end-effector tool (16) includes an end-effector attachment assembly (40) configured to engage the workpiece (12) to secure the end-effector tool (16) at the predetermined location.

6. The processing system as set forth in claim 5 wherein:
the end-effector attachment assembly (40) includes a plurality of holders (42) attached to the fixture (22) and a vacuum assembly (46) in fluid communication with the holders (42); and
the controller (36) is configured to activate the vacuum assembly (46) when the holders (42) engage the workpiece (12) to create suction between the holders (42) and the workpiece (12) to vacuum attach the end-effector tool (16) to the workpiece (12) at the predetermined location.

7. The processing system as set forth in claim 1 wherein:
the end-effector tool (16) includes a plurality of positioning sensors (30) coupled to the fixture (22); and
the positioning sensors (30) are configured to align the end-effector tool (16) relative to the workpiece (12) such that the first process tools (24) align at the predetermined location.

8. The processing system as set forth in claim 7 wherein:
the workpiece (12) includes at least one reference guide (32); and
the positioning sensors (30) are configured to identify the reference guide (32) to position the end-effector tool(16) relative to the work surface (14) such that the first process tools (24) align in the predetermined location.

9. The processing system as set forth in claim 1 wherein each of the first process tools (24) includes a drill assembly (56).

10. The processing system as set forth in claim 22 wherein the drill assembly of each of the first process tools includes:
a drill having a processing bit (60);
a drill feed actuator (66) coupled to the drill and configured to move the processing bit (60) along a longitudinal axis (68) between a retracted position and an extended position; and
a drill actuator (64) coupled to the processing bit and configured to selectively operate the processing bit.

11. The processing system as set forth in claim 1 wherein each of the first process tools (24) includes a probe assembly (92).

12. The processing system as set forth in claim 11 wherein the probe assembly (92) of each of the first process tools (24) includes a probe (94) configured to measure characteristics of the workpiece (12).

13. A probe assembly for measuring characteristics of a hole of a workpiece, the probe assembly comprising:
a probe (94) insertable into the hole (52) of the workpiece (12) to measure characteristics of the hole (52); and
a self-alignment compliance assembly (122) coupled to the probe (94) to allow compliance of the probe (94) relative to the workpiece (12) to accommodate one or more workpiece tolerances as the probe (94) is inserted into the hole (52).

14. The probe assembly as set forth in claim 13 wherein:
the self-alignment compliance assembly (122) includes a housing (124) defining a cavity (126) along a longitudinal axis (68), and the probe (94) is disposed through the cavity (126); and
the self-alignment compliance assembly (122) includes a first biasing member (130) disposed between a plurality of first reaction surfaces (128) within the housing (124) to allow tilting of the probe (94) relative to the longitudinal axis (68) such that the probe (94) self-aligns to the workpiece (12) as the probe (94) is inserted into the hole (52).

15. A method of manufacturing a component of an aircraft, the method comprising:
providing a workpiece (12) having a work surface (14);
selecting an end-effector tool (16) to perform a task to the work surface (14), wherein the end-effector tool (16) includes:
a fixture (22); and
a set of first process tools (24) attached to the fixture (22) in a predetermined pattern, and the first process tools (24) are configured to perform the task to the work surface (14);
controlling movement of the end-effector tool (16), via a controller (36), to position the first process tools (24) relative to the work surface (14) such that the predetermined pattern is aligned at a predetermined location relative to the work surface (14); and
controlling operation of the first process tools (24), via the controller (36), such that the first process tools (24) perform the task to the work surface (14) to form a first processed area (38) at the predetermined location of the work surface (14).
